# EUROPÄISCHE PATENTSCHRIFT

(11) **EP 3 341 245 B1**
(45) Veröffentlichungstag und Bekanntmachung des Hinweises auf die Patenterteilung: **04.12.2019**
(21) Anmeldenummer: 16735608.8
(22) Anmeldetag: 28.06.2016
(51) Int. Cl.: B60R 16/037, B60K 37/06, G06F 3/048

(54) **VERFAHREN UND VORRICHTUNG ZUM BEREITSTELLEN EINES EMPFEHLUNGSSIGNALS ZUM STEUERN ZUMINDEST EINER FUNKTION IN EINEM FAHRZEUG**
METHOD AND DEVICE FOR PROVIDING A RECOMMENDATION SIGNAL FOR CONTROLLING AT LEAST ONE FUNCTION IN A VEHICLE
PROCÉDÉ ET DISPOSITIF DE FOURNITURE D'UN SIGNAL DE RECOMMANDATION POUR LA COMMANDE D'AU MOINS UNE FONCTION DANS UN VÉHICULE

(30) Priorität: 28.08.2015 DE 102015216484
(43) Veröffentlichungstag der Anmeldung: 04.07.2018
(73) Patentinhaber: Robert Bosch GmbH, 70442 Stuttgart (DE)
(72) Erfinder: WALTER, Nadine, 74321 Bietigheim-Bissingen (DE); ALTMUELLER, Tobias, 70567 Stuttgart (DE)
(86) Internationale Anmeldenummer: PCT/EP2016/064995
(87) Internationale Veröffentlichungsnummer: WO 2017/036629

(56) Entgegenhaltungen:
- EP-A2- 0 899 164
- DE-A1-102014 202 234
- AMDITIS A ET AL: "Towards the Automotive HMI of the Future: Overview of the AIDE-Integrated Project Results", IEEE TRANSACTIONS ON INTELLIGENT TRANSPORTATION SYSTEMS, IEEE, PISCATAWAY, NJ, USA, Bd. 11, Nr. 3, 1. September 2010 (2010-09-01), Seiten 567-578, XP011312583, ISSN: 1524-9050, DOI: 10.1109/TITS.2010.2048751

## Beschreibung

### Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

In Fahrzeugen beispielsweise kann eine Anzahl von Funktionen sowohl bei Fahrerassistenzsystemen als auch bei Fahrerinformationssystemen steigen, z. B. durch zunehmende Integration von Smartphones in Fahrzeuge, Installation von Apps direkt auf einem Infotainmentsystem. Fahrer möchten beispielsweise solche Funktionen häufig auch dort nutzen, möglichst auch während der Fahrt. Ein Trend kann insbesondere in Richtung Personalisierung gehen, auch in Fahrzeugen. Individuelle Sitz- oder Spiegeleinstellungen können auf einem Schlüssel gespeichert werden, Playlists etc. können durch Synchronisation mit einem Smartphone ins Fahrzeug kommen. Eine Identifikation eines Fahrers kann unter anderem durch ein Profil auf einem Smartphone, das an ein Fahrzeug übertragen wird, eine Kamera im Fahrzeug oder ein auf einem Fahrzeugschlüssel gespeichertes Profil möglich sein.

Die DE 10 2014 202 234 A1 offenbart eine Interaktionssteuerungseinrichtung und ein Interaktionssteuerungsverfahren, wobei Bedienzugriffe eines Benutzers auf ein Gerät mittels einer Benutzerbeobachtungskomponente erfasst werden, eine Situation mittels einer Situationserfassungskomponente auf Grundlage von Sensordaten erfasst wird, erfasste Bedienzugriffe des Benutzers erfassten Situationen mittels einer Zuordnungskomponente zugeordnet werden und in Abhängigkeit einer erfassten aktuellen Situation und einem erfassten aktuellen Bedienzugriff auf Grundlage der Zuordnung von Bedienzugriffen zu Situationen eine Bedienung des Geräts eingeleitet wird.

Die EP 0 899 164 A2 offenbart eine Vorrichtung zur Steuerung der Funktionen eines Autoradios.

### Offenbarung der Erfindung

Vor diesem Hintergrund werden mit dem hier vorgestellten Ansatz ein Verfahren, weiterhin eine Vorrichtung, welche dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Gemäß Ausführungsformen der vorliegenden Erfindung kann insbesondere ein adaptiver Empfehlungsdienst bereitgestellt werden, der einem Fahrer auf verschiedene Art und Weise Empfehlungen unterbreiten kann, um eine Anzahl von Bedienschritten zum Steuern einer Funktion zu reduzieren. Hierbei kann insbesondere eine Erweiterbarkeit bzw. eine dynamische Anbindung von Funktionen, beispielsweise auch während der Laufzeit realisiert werden. Es kann somit insbesondere ein erweiterbares Konzept für einen adaptiven Empfehlungsdienst bereitgestellt werden, beispielsweise sowohl eine Software-Architektur als auch ein Interaktionskonzept betreffend.

Vorteilhafterweise kann gemäß Ausführungsformen der vorliegenden Erfindung insbesondere eine Bedienung oder Steuerung zumindest einer Funktion mit mehr Komfort und weniger Ablenkung ermöglicht werden, wobei beliebige Funktionen unterstützt werden können, auch solche, die während der Laufzeit hinzukommen. Ein solcher adaptiver Empfehlungsdienst kann einen Fahrer beispielsweise durch proaktive Vorschläge unterstützen und kann in eine HMI-Gesamtarchitektur (HMI = Human-Machine-Interface; Mensch-Maschine-Schnittstelle) eingebettet sein, wobei besonders auch verhindert werden kann, dass ein Fahrer durch Empfehlungen zusätzlich belastet wird.

Es wird ein Verfahren zum Bereitstellen eines Empfehlungssignals zum Steuern zumindest einer Funktion in einem Fahrzeug vorgestellt, wobei die zumindest eine Funktion auf mindestens einer Nutzervorrichtung ausführbar ist, die zumindest temporär in dem Fahrzeug angeordnet ist, wobei das Verfahren folgende Schritte aufweist:
Durchführen eines Vergleichs von aktuellen Situationsdaten, die eine durch zumindest eine dem Fahrzeug zugeordnete Erfassungseinrichtung erfasste, aktuelle, kontextuale Situation repräsentieren, mit zumindest einem von zumindest einem Verhaltensdatensatz hergeleiteten Regeldatensatz, wobei der Verhaltensdatensatz erlernte Daten über eine situationsbezogene, routinemäßige Nutzung der zumindest einen Funktion durch einen Nutzer repräsentiert, wobei der Verhaltensdatensatz durch Verknüpfen mindestens eines von zumindest einer Schnittstelle zu mindestens einer Nutzervorrichtung eingelesenen Nutzungssignals, das Nutzungsdaten über eine Nutzung der zumindest einen Funktion, die spätestens während der Laufzeit des Verfahrens registriert wird, durch einen Nutzer repräsentiert, mit Situationsdaten, die eine durch zumindest eine dem Fahrzeug zugeordnete Erfassungseinrichtung erfasste, kontextuale Situation während der Nutzung repräsentieren, erzeugt ist; und
Erzeugen des Empfehlungssignals in Abhängigkeit von einem Ergebnis des im Schritt des Durchführens durchgeführten Vergleichs, wobei das Empfehlungssignal eine Empfehlung zum Steuern der zumindest einen Funktion in dem Fahrzeug repräsentiert.

Dieses Verfahren kann beispielsweise in Software oder Hardware oder in einer Mischform aus Software und Hardware beispielsweise in einem Steuergerät oder einer Vorrichtung implementiert sein. Das Verfahren kann beispielsweise in Verbindung mit einem sogenannten Infotainmentsystem einsetzbar sein, wobei zusätzlich oder alternativ auch eine Erweiterung für andere Bereiche wie beispielsweise Fahrerassistenzsysteme vorgesehen sein kann. Die Nutzervorrichtung kann in dem Fahrzeug fest eingebaut sein oder abnehmbar mit dem Fahrzeug koppelbar oder gekoppelt sein. Die Nutzervorrichtung kann als eine Fahrzeugvorrichtung oder ein Teil des Fahrzeugs oder als eine tragbare Vorrichtung ausgeführt sein. Die Situationsdaten können eine Situation des Nutzers, des Fahrzeugs und zusätzlich oder alternativ eines Umfeldes oder eine Umgebung repräsentieren. Dabei können die Situationsdaten eine zeitliche, räumliche, geografische und zusätzlich oder alternativ funktionale Situation repräsentieren. Die Nutzungsdaten können einen Namen der Nutzervorrichtung, einen Namen der zumindest einen Funktion und Nutzungsparameter aufweisen, die beispielsweise durch den Nutzer eingegebenen Bedienbefehle, Steuerbefehle oder dergleichen repräsentieren können. In Verbindung mit den Situationsdaten können die Nutzungsdaten die durch den Empfehlungsdatensatz repräsentierten, erlernten Daten über die situationsbezogene, routinemäßige Nutzung der zumindest einen Funktion durch den Nutzer bilden. Die Empfehlung zum Steuern der zumindest einen Funktion kann zumindest ein Steuersignal oder Ansteuersignal repräsentieren, das ausgebildet sein kann, um eine Ausführung der zumindest einen Funktion zu steuern. Der Verhaltensdatensatz kann erfasst werden, um daraus Regeln in Gestalt des zumindest einen Regeldatensatzes für die Empfehlungen herzuleiten. Der Verhaltensdatensatz kann eine Sammlung von Nutzungsdaten zugeordnet zu einer Situation repräsentieren. Der Regeldatensatz kann zumindest eine Regel zum Bestimmen, wann oder in welcher Situation dem Nutzer eine Empfehlung unterbreitet werden soll, repräsentieren.

Auch kann das Verfahren einen Schritt des Herleitens des zumindest einen Regeldatensatzes von dem zumindest einen Verhaltensdatensatz unter Verwendung eines maschinellen Lernverfahrens aufweisen. Dabei können bei dem maschinellen Lernverfahren insbesondere neuronale Netze zum Einsatz kommen. Eine solche Ausführungsform bietet den Vorteil, dass zuverlässige und zutreffende Regeln ermittelt werden können.

Gemäß der Erfindung weist das Verfahren einen Schritt des Verknüpfens mindestens eines von zumindest einer Schnittstelle zu mindestens einer Nutzervorrichtung eingelesenen Nutzungssignals, das Nutzungsdaten über eine Nutzung der zumindest einen Funktion, die spätestens während der Laufzeit des Verfahrens registriert wird, durch einen Nutzer repräsentiert, mit Situationsdaten auf, die eine durch zumindest eine dem Fahrzeug zugeordnete Erfassungseinrichtung erfasste, kontextuale Situation während der Nutzung repräsentieren, um den Verhaltensdatensatz zu erzeugen. Eine solche Ausführungsform bietet den Vorteil, dass eine routinemäßige Nutzung der zumindest einen Funktion durch den Nutzer situationsbezogen erlernt werden kann. Somit können Benutzerbedürfnisse im Hinblick auf eine empfohlene Bedienungserleichterung zuverlässig erkannt werden.

Hierbei weist das Verfahren auch einen Schritt des Einrichtens der zumindest einen Schnittstelle zu der mindestens einen Nutzervorrichtung spätestens während der Laufzeit des Verfahrens auf. Ferner weist das Verfahren einen Schritt des Registrierens der zumindest einen Funktion spätestens während der Laufzeit des Verfahrens über die zumindest eine eingerichteten Schnittstelle auf, wobei erst im Schritt des Registrierens Kenntnis über die zumindest eine Funktion erlangt wird. Eine solche Ausführungsform bietet den Vorteil, dass eine adaptive und dynamische Erweiterbarkeit bezüglich Funktionen und Nutzervorrichtungen auch während der Laufzeit erreicht werden kann. Somit können Empfehlungen auch für neue hinzugekommene Nutzervorrichtungen und Funktionen bereitgestellt werden.

Auch können im Schritt des Durchführens des Vergleichs die aktuellen Situationsdaten und zusätzlich oder alternativ im Schritt des Verknüpfens die Situationsdaten von einer Schnittstelle zu dem Fahrzeug, von einer Schnittstelle zu mindestens einer Nutzerfassungseinrichtung zum Erfassen eines Verhaltens des Nutzers und zusätzlich oder alternativ von einer Schnittstelle zu mindestens einer Umfelderfassungseinrichtung zum Erfassen eines Umfeldes des Fahrzeugs und zusätzlich oder alternativ des Nutzers eingelesen werden. Hierbei können von der Schnittstelle zu dem Fahrzeug beispielsweise Funktionsnutzungsdaten über aktuell aktive und genutzte Funktionen, Uhrzeitdaten und zusätzlich oder alternativ Fahrzeugdaten eingelesen werden, wie beispielsweise Geschwindigkeitsdaten, Beschleunigungsdaten oder dergleichen. Von der Schnittstelle zu der Umfelderfassungseinrichtung können beispielsweise auch Positionsdaten oder dergleichen eingelesen werden. Das Verhalten des Nutzers kann eine Bewegung, Position oder dergleichen repräsentieren. Eine solche Ausführungsform bietet den Vorteil, dass die Situationsdaten und zusätzlich oder alternativ die aktuellen Situationsdaten einen zuverlässigen und genauen Kontext für die Verknüpfung mit den Nutzungsdaten und zusätzlich oder alternativ die aktuellen Situationsdaten einen zuverlässigen und genauen Kontext zum Durchführen des Vergleichs mit dem Empfehlungsdatensatz bieten können.

Ferner kann das Verfahren einen Schritt des Ausgebens des erzeugten Empfehlungssignals an eine Schnittstelle zu mindestens einer Interaktionsvorrichtung zur Interaktion mit dem Nutzer in dem Fahrzeug aufweisen. Hierbei kann das Empfehlungssignal ausgebildet sein, um bei Verwendung durch eine Interaktionsvorrichtung eine Darstellung der Empfehlung zum Steuern der zumindest einen Funktion in dem Fahrzeug mittels einer grafischen Benutzeroberfläche zu bewirken. Die Interaktionsvorrichtung kann einen Bildschirm und zusätzlich oder alternativ eine Benutzereingabeeinrichtung aufweisen. Die Benutzeroberfläche kann adaptiv sein. Eine solche Ausführungsform bietet den Vorteil, dass die Empfehlung dem Nutzer in dem Fahrzeug zuverlässig dargestellt werden kann, um einen Bedienkomfort der zumindest einen Funktion zu erhöhen.

Dabei kann das Verfahren einen Schritt des Bestimmens mindestens einer Interaktionsvorrichtung aus einer Mehrzahl von Interaktionsvorrichtungen für den Schritt des Ausgebens unter Verwendung von aktuellen Situationsdaten aufweisen. Hierbei kann der Schritt des Bestimmens unter Verwendung eines Ressource-Managers ausgeführt werden. Eine solche Ausführungsform bietet den Vorteil, dass unter mehreren Interaktionsvorrichtungen eine angesichts der aktuellen Situation besonders geeignete Interaktionsvorrichtungen zur Darstellung der Empfehlung ausgewählt werden kann. So kann beispielsweise eine Überlagerung wichtiger Informationen durch die Empfehlung verhindert werden und kann eine gemäß der aktuellen Situation im Sichtfeld des Nutzers gelegene Interaktionsvorrichtung genutzt werden.

Auch kann das Verfahren hierbei einen Schritt des Ermittelns eines Zeitpunktes zum Ausgeben des erzeugten Empfehlungssignals unter Verwendung von aktuellen Situationsdaten aufweisen. Dabei kann der Schritt des Ermittelns unter Verwendung eines Workload-Managers ausgeführt werden. Eine solche Ausführungsform bietet den Vorteil, dass insbesondere eine Überlastung des Nutzers durch bereitstellen einer Empfehlung zu einem Zeitpunkt mit hoher Arbeitsbelastung oder Informationslast im Fahrzeug verhindert werden kann.

Zudem kann das Verfahren einen Schritt des Generierens einer grafischen Benutzeroberfläche zum Darstellen der durch das Empfehlungssignal repräsentierten Empfehlung zum Steuern der zumindest einen Funktion in dem Fahrzeug aufweisen. Hierbei kann im Schritt des Generierens eine grafische Benutzeroberfläche generiert werden, mittels derer zumindest ein Einstellelement zum Einstellen einer Darstellungsweise der durch das Empfehlungssignal repräsentierten Empfehlung unter Verwendung mindestens einer Interaktionsvorrichtung in dem Fahrzeug darstellbar ist. Die Darstellungsweise der Empfehlung kann zwischen einer Darstellung einer Mehrzahl von auswählbaren Empfehlungen, einer Darstellung einer annehmbaren und ablehnbaren Empfehlung und einer Darstellung einer Benachrichtigung über das Ausführen einer Empfehlung mit Abbruchmöglichkeit einstellbar sein. Die Benutzeroberfläche kann adaptiv sein. Eine solche Ausführungsform bietet den Vorteil, dass die Art und Weise der Darstellung von Empfehlungen auf situativ und für den Nutzer geeignete Weise vorgenommen und auch verändert werden kann.

Dabei kann im Schritt des Generierens eine grafische Benutzeroberfläche generiert werden, mittels derer zumindest eine Benachrichtigung über einen neu hergeleiteten Regeldatensatz und zusätzlich oder alternativ ein neu bereitgestelltes Empfehlungssignal unter Verwendung mindestens einer Interaktionsvorrichtung in dem Fahrzeug darstellbar ist. Eine solche Ausführungsform bietet den Vorteil, dass für den Nutzer eine Verständlichkeit der Empfehlungsbereitstellung und des Erlernens des Nutzerverhaltens erhöht werden kann.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:
Fig. 1 eine schematische Darstellung einer Vorrichtung gemäß einem Ausführungsbeispiel in einem Fahrzeug;
Fig. 2 ein Ablaufdiagramm eines Verfahrens zum Bereitstellen eines Empfehlungssignals gemäß einem Ausführungsbeispiel;
Fig. 3 ein Ablaufdiagramm eines Prozesses zum Steuern einer Funktion gemäß einem Ausführungsbeispiel;
Fig. 4 eine schematische Darstellung einer Vorrichtung gemäß einem Ausführungsbeispiel;
Fig. 5 eine schematische Darstellung eines Signalflusses zwischen zumindest einer Nutzervorrichtung und dem adaptiven Empfehlungsdienst aus Fig. 4;
Fig. 6 eine schematische Darstellung von Komponenten des adaptiven Empfehlungsdienstes aus Fig. 4 bzw. Fig. 5 in Verbindung mit Anwendungen und erlerntem Nutzerverhalten;
Fig. 7 eine schematische Darstellung des adaptiven Empfehlungsdienstes aus Fig. 4, Fig. 5 bzw. Fig. 6;
Fig. 8 eine Darstellung einer ersten Bildschirmanzeige einer grafischen Benutzeroberfläche gemäß einem Ausführungsbeispiel;
Fig. 9 eine Darstellung einer zweiten Bildschirmanzeige einer grafischen Benutzeroberfläche gemäß einem Ausführungsbeispiel;
Fig. 10 eine Darstellung einer dritten Bildschirmanzeige einer grafischen Benutzeroberfläche gemäß einem Ausführungsbeispiel;
Fig. 11 eine Darstellung einer vierten Bildschirmanzeige einer grafischen Benutzeroberfläche gemäß einem Ausführungsbeispiel; und
Fig. 12 eine Darstellung einer fünften Bildschirmanzeige einer grafischen Benutzeroberfläche gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

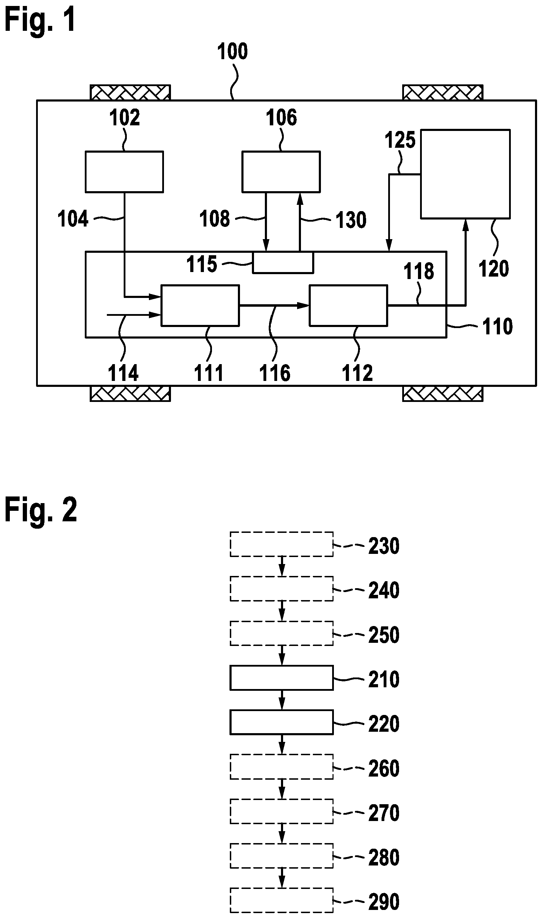

Fig. 1 zeigt eine schematische Darstellung einer Vorrichtung 110 gemäß einem Ausführungsbeispiel in einem Fahrzeug 100. Die Vorrichtung 110 ist ausgebildet, um ein Empfehlungssignal 118 zum Steuern zumindest einer Funktion in dem Fahrzeug 100 bereitzustellen. Das Empfehlungssignal 118 repräsentiert hierbei eine Empfehlung zum Steuern der zumindest einen Funktion in dem Fahrzeug 100. Die Vorrichtung 110 kann auch als eine Empfehlungsvorrichtung 110, als eine Bereitstellungsvorrichtung 110 zum Bereitstellen des Empfehlungssignals 118 oder als ein adaptiver Empfehlungsdienst 110 bezeichnet werden.

Das Fahrzeug 100 weist zumindest eine dem Fahrzeug 100 zugeordnete Erfassungseinrichtung 102, zumindest eine Nutzervorrichtung 106 und die Bereitstellungsvorrichtung 110 auf. Gemäß dem in Fig. 1 dargestellten Ausführungsbeispiel weist das Fahrzeug 100 beispielhaft lediglich eine Erfassungseinrichtung 102, beispielhaft lediglich eine Nutzervorrichtung 106 und die Bereitstellungsvorrichtung 110 sowie beispielhaft lediglich eine Interaktionsvorrichtung 120 auf. Die zumindest eine Funktion ist auf der Nutzervorrichtung 106 ausführbar. Die Nutzervorrichtung 106 ist zumindest temporär in dem Fahrzeug 100 angeordnet.

Die Erfassungseinrichtung 102 ist signalübertragungsfähig mit der Bereitstellungsvorrichtung 110 verbunden und ausgebildet, um der Bereitstellungsvorrichtung 110 Situationsdaten 104 bzw. aktuelle Situationsdaten 104 bereitzustellen. Die Nutzervorrichtung 106 ist signalübertragungsfähig mit der Bereitstellungsvorrichtung 110 verbunden und ausgebildet, um der Bereitstellungsvorrichtung 110 ein Nutzungssignal 108 bereitzustellen.

Die Bereitstellungsvorrichtung 110 weist eine Durchführungseinrichtung 111 zum Durchführen eines Vergleichs, eine Erzeugungseinrichtung 112 zum Erzeugen des Empfehlungssignals 118 und beispielhaft lediglich eine Schnittstelle 115 zu der Nutzervorrichtung 106 auf.

Die Durchführungseinrichtung 111 ist ausgebildet, um einen Vergleich von aktuellen Situationsdaten 104, die eine durch die Erfassungseinrichtung 102 erfasste, aktuelle, kontextuale Situation repräsentieren, mit zumindest einem von zumindest einem Verhaltensdatensatz hergeleiteten Regeldatensatz 114 durchzuführen, wobei der Verhaltensdatensatz erlernte Daten über eine situationsbezogene, routinemäßige Nutzung der zumindest einen Funktion durch einen Nutzer repräsentiert. Der Verhaltensdatensatz ist durch Verknüpfen mindestens eines von der Schnittstelle 115 zu der Nutzervorrichtung 106 eingelesenen Nutzungssignals 108, das Nutzungsdaten über eine Nutzung der zumindest einen Funktion, die spätestens während der Laufzeit registriert wird, durch einen Nutzer repräsentiert, mit Situationsdaten 104 erzeugt, die eine durch die Erfassungseinrichtung 102 erfasste, kontextuale Situation während der Nutzung repräsentieren.

Die Durchführungseinrichtung 111 ist auch ausgebildet, um ein Ergebnissignal 116 bereitzustellen, das ein Ergebnis des durchgeführten Vergleichs repräsentiert. Die Erzeugungseinrichtung 112 ist ausgebildet, um das Ergebnissignal 116 von der Durchführungseinrichtung 111 einzulesen.

Die Erzeugungseinrichtung 112 ist ausgebildet, um das Empfehlungssignal 118 in Abhängigkeit von dem durch das Ergebnissignal 116 repräsentierten Ergebnis des durchgeführten Vergleichs zu erzeugen. Die Bereitstellungsvorrichtung 110 ist ferner ausgebildet, um das Empfehlungssignal 118 bereitzustellen.

Die Bereitstellungsvorrichtung 110 ist ausgebildet, um unter Verwendung der aktuellen Situationsdaten 104, des Nutzungssignals 108, der Situationsdaten 104 und/oder des Regeldatensatzes 114 das Empfehlungssignal 118 zu erzeugen und bereitzustellen.

Gemäß dem in Fig. 1 dargestellten Ausführungsbeispiel ist die Bereitstellungsvorrichtung 110 auch ausgebildet, um das erzeugte und bereitgestellte Empfehlungssignal 118 an eine Schnittstelle zu der Interaktionsvorrichtung 120 zur Interaktion mit dem Nutzer in dem Fahrzeug 100 auszugeben. Die Interaktionsvorrichtung 120 ist signalübertragungsfähig mit der Bereitstellungsvorrichtung 110 verbunden. Bei einer Verwendung des Empfehlungssignals 118 durch die Interaktionsvorrichtung 120 ist das Empfehlungssignal 118 ausgebildet, um eine Darstellung der Empfehlung zum Steuern der zumindest einen Funktion in dem Fahrzeug 100 mittels einer grafischen Benutzeroberfläche auf der Interaktionsvorrichtung 120 zu bewirken.

Dabei ist die Interaktionsvorrichtung 120 gemäß einem Ausführungsbeispiel auch ausgebildet, um ein Benutzereingabesignal 125 an die Bereitstellungsvorrichtung 110 auszugeben. Das Benutzereingabesignal 120 repräsentiert eine Benutzereingabe ansprechend auf die mittels der grafischen Benutzeroberfläche auf der Interaktionsvorrichtung 120 dargestellte Empfehlung zum Steuern der zumindest einen Funktion in dem Fahrzeug 100 aus dem Empfehlungssignal 118. Hierbei ist die Bereitstellungsvorrichtung 110 ausgebildet, um ansprechend auf das Benutzereingabesignal 125 ein Steuersignal 130 an die Nutzervorrichtung 106 auszugeben. Das Steuersignal 130 repräsentiert zumindest einen Steuerbefehl zum Steuern der zumindest einen Funktion.

Fig. 2 zeigt ein Ablaufdiagramm eines Verfahrens 200 zum Bereitstellen eines Empfehlungssignals gemäß einem Ausführungsbeispiel. Das Verfahren 200 ist ausgebildet, um ein Empfehlungssignal zum Steuern zumindest einer Funktion in einem Fahrzeug bereitzustellen. Dabei ist die zumindest eine Funktion auf mindestens einer Nutzervorrichtung ausführbar, die zumindest temporär in dem Fahrzeug angeordnet ist. Das Verfahren 200 zum Bereitstellen ist in Verbindung mit bzw. unter Verwendung von der Vorrichtung bzw. Bereitstellungsvorrichtung aus Fig. 1 oder einer ähnlichen Vorrichtung ausführbar.

Das Verfahren 200 zum Bereitstellen weist einen Schritt 210 des Durchführens eines Vergleichs von aktuellen Situationsdaten, die eine durch zumindest eine dem Fahrzeug zugeordnete Erfassungseinrichtung erfasste, aktuelle, kontextuale Situation repräsentieren, mit zumindest einem von zumindest einem Verhaltensdatensatz hergeleiteten Regeldatensatz auf, wobei der Verhaltensdatensatz erlernte Daten über eine situationsbezogene, routinemäßige Nutzung der zumindest einen Funktion durch einen Nutzer repräsentiert. Hierbei ist der Verhaltensdatensatz durch Verknüpfen mindestens eines von zumindest einer Schnittstelle zu mindestens einer Nutzervorrichtung eingelesenen Nutzungssignals, das Nutzungsdaten über eine Nutzung der zumindest einen Funktion, die spätestens während der Laufzeit des Verfahrens registriert wird, durch einen Nutzer repräsentiert, mit Situationsdaten erzeugt, die eine durch zumindest eine dem Fahrzeug zugeordnete Erfassungseinrichtung erfasste, kontextuale Situation während der Nutzung repräsentieren. Auch weist das Verfahren 200 zum Bereitstellen einen Schritt 220 des Erzeugens des Empfehlungssignals in Abhängigkeit von einem Ergebnis des im Schritt 210 des Durchführens durchgeführten Vergleichs auf. Das Empfehlungssignal repräsentiert eine Empfehlung zum Steuern der zumindest einen Funktion in dem Fahrzeug.

Beispielsweise können hierbei im Schritt 210 des Durchführens des Vergleichs die aktuellen Situationsdaten von einer Schnittstelle zu dem Fahrzeug, von einer Schnittstelle zu mindestens einer Nutzerfassungseinrichtung zum Erfassen eines Verhaltens des Nutzers und zusätzlich oder alternativ von einer Schnittstelle zu mindestens einer Umfelderfassungseinrichtung zum Erfassen eines Umfeldes des Fahrzeugs und zusätzlich oder alternativ des Nutzers eingelesen werden.

Gemäß einem Ausführungsbeispiel weist das Verfahren 200 zum Bereitstellen vor dem Schritt 210 des Durchführens des Vergleichs einen Schritt 230 des Einrichtens, einen Schritt 240 des Registrierens und/oder einen Schritt 250 des Verknüpfens auf. Hierbei sind der Schritt 230 des Einrichtens und der Schritt 240 des Registrierens beispielsweise vor dem Schritt 250 des Verknüpfens ausführbar.

Dabei wird im Schritt 250 des Verknüpfens mindestens ein von zumindest einer Schnittstelle zu mindestens einer Nutzervorrichtung eingelesenes Nutzungssignal, das Nutzungsdaten über eine Nutzung der zumindest einen Funktion, die spätestens während der Laufzeit des Verfahrens registriert wird, durch einen Nutzer repräsentiert, mit Situationsdaten verknüpft, die eine durch zumindest eine dem Fahrzeug zugeordnete Erfassungseinrichtung erfasste, kontextuale Situation während der Nutzung repräsentieren, um den Verhaltensdatensatz für den Schritt 210 des Durchführens zu erzeugen.

Im Schritt 230 des Einrichtens wird die zumindest eine Schnittstelle zu der mindestens einen Nutzervorrichtung spätestens während der Laufzeit des Verfahrens eingerichtet. Im Schritt 240 des Registrierens wird die zumindest eine Funktion spätestens während der Laufzeit des Verfahrens über die zumindest eine im Schritt 230 des Einrichtens eingerichtete Schnittstelle registriert. Dabei wird die zumindest eine Funktion spätestens während der Laufzeit des Verfahrens über die zumindest eine Schnittstelle insbesondere in der Bereitstellungsvorrichtung aus Fig. 1 oder einer ähnlichen Vorrichtung registriert. Registrieren heißt dabei, dass der Empfehlungsdienst dann überhaupt erst Kenntnis über diese Funktion hat.

Optional können im Schritt 250 des Verknüpfens die Situationsdaten von einer Schnittstelle zu dem Fahrzeug, von einer Schnittstelle zu mindestens einer Nutzerfassungseinrichtung zum Erfassen eines Verhaltens des Nutzers und zusätzlich oder alternativ von einer Schnittstelle zu mindestens einer Umfelderfassungseinrichtung zum Erfassen eines Umfeldes des Fahrzeugs und zusätzlich oder alternativ des Nutzers eingelesen werden.

Gemäß einem Ausführungsbeispiel weist das Verfahren 200 zum Bereitstellen nach dem Schritt 220 des Erzeugens einen Schritt 260 des Generierens, einen Schritt 270 des Bestimmens, einen Schritt 280 des Ermittelns und/oder einen Schritt 290 des Ausgebens auf. Dabei sind der Schritt 260 des Generierens, der Schritt 270 des Bestimmens und der Schritt 280 des Ermittelns beispielsweise vor dem Schritt 290 des Ausgebens ausführbar.

Im Schritt 290 des Ausgebens wird das erzeugte Empfehlungssignal schließlich an eine Schnittstelle zu mindestens einer Interaktionsvorrichtung zur Interaktion mit dem Nutzer in dem Fahrzeug ausgegeben. Hierbei ist das Empfehlungssignal ausgebildet, um bei Verwendung durch eine Interaktionsvorrichtung eine Darstellung der Empfehlung zum Steuern der zumindest einen Funktion in dem Fahrzeug mittels einer grafischen Benutzeroberfläche zu bewirken.

Im Schritt 260 des Generierens wird eine grafische Benutzeroberfläche zum Darstellen der durch das Empfehlungssignal repräsentierten Empfehlung zum Steuern der zumindest einen Funktion in dem Fahrzeug generiert. Dabei wird im Schritt 260 des Generierens eine grafische Benutzeroberfläche generiert, mittels derer zumindest ein Einstellelement zum Einstellen einer Darstellungsweise der durch das Empfehlungssignal repräsentierten Empfehlung unter Verwendung mindestens einer Interaktionsvorrichtung in dem Fahrzeug darstellbar ist. Auch wird optional im Schritt des Generierens eine grafische Benutzeroberfläche generiert, mittels derer zumindest eine Benachrichtigung über einen neu hergeleiteten Regeldatensatz und/oder ein neu bereitgestelltes Empfehlungssignal unter Verwendung mindestens einer Interaktionsvorrichtung in dem Fahrzeug darstellbar ist.

Im Schritt 270 des Bestimmens wird für den Schritt 290 des Ausgebens mindestens eine Interaktionsvorrichtung aus einer Mehrzahl von Interaktionsvorrichtungen unter Verwendung von aktuellen Situationsdaten bestimmt.

Im Schritt 280 des Ermittelns wird für den Schritt 290 des Ausgebens ein Zeitpunkt zum Ausgeben des erzeugten Empfehlungssignals unter Verwendung von aktuellen Situationsdaten ermittelt.

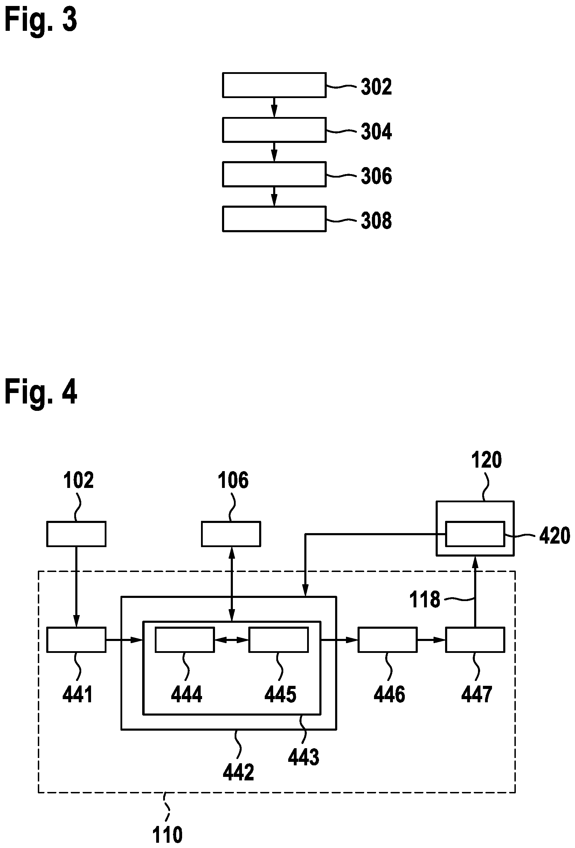

Fig. 3 zeigt ein Ablaufdiagramm eines Prozesses 300 zum Steuern einer Funktion gemäß einem Ausführungsbeispiel. Der Prozess 300 zum Steuern ist in Verbindung mit dem Verfahren aus Fig. 2 oder einem ähnlichen Verfahren und/oder in Verbindung mit der Bereitstellungsvorrichtung aus Fig. 1 oder einer ähnlichen Vorrichtung ausführbar.

Ein erster Block 302 repräsentiert ein Erlernen eines Nutzungsverhaltens bezüglich einer Situation. Ein zweiter Block 304 repräsentiert eine Identifizierung von Nutzerbedürfnissen basierend auf der Situation. Ein dritter Block 306 repräsentiert eine Empfehlung einer vorkonfigurierten Funktion. Ein vierter Block 308 repräsentiert eine Ausführung der vorkonfigurierten Funktion.

Die Bereitstellungsvorrichtung bzw. ein adaptiver Empfehlungsdienst, der ein Nutzungsverhalten des Fahrers lernt, wie in dem ersten Block 302, und darauf basierend Vorschläge zu vorkonfigurierten Funktionen unterbreitet, wie in dem dritten Block 306, ist eine Möglichkeit, eine Fahrerablenkung durch eine geringere Anzahl an Bedienschritten zu reduzieren. Eine solche Bereitstellungsvorrichtung repräsentiert einen erweiterbaren adaptiven Empfehlungsdienst, der es ermöglichen kann, auch Vorschläge zu Funktionen zu unterbreiten, die wie Apps bzw. Applikationen oder Anwendungen beispielsweise vom Fahrer direkt auf einem Infotainmentsystem des Fahrzeugs installiert sind oder werden. Der adaptive Empfehlungsdienst beobachtet das Bedienverhalten des Fahrers im ersten Block 302 und lernt in dem zweiten Block 304, wann und wie der Fahrer unterstützt werden kann. Dem Fahrer werden dann in dem dritten Block 306 abhängig von der Situation Vorschläge unterbreitet. Es werden dabei vorkonfigurierte Funktionen, wie z. B. "spiele Album X", empfohlen, um diese mit weniger Bedienschritten zu erreichen. Auch Funktionen, die vom Fahrer nachträglich auf dem Infotainmentsystem installiert wurden, werden von dem Prozess 300 unterstützt. Die Vorschläge werden je nach Wunsch des Fahrers in drei verschiedenen Adaptionsstufen in Form von Shortcuts, Pop-Up-Nachrichten oder durch automatisches Ausführen dargestellt bzw. in dem vierten Block 308 ausgeführt.

Fig. 4 zeigt eine schematische Darstellung einer Vorrichtung 110 gemäß einem Ausführungsbeispiel. Bei der Vorrichtung 110 handelt es sich hierbei um die Vorrichtung aus Fig. 1 oder eine ähnliche Vorrichtung. Insbesondere entspricht die Vorrichtung 110 der Vorrichtung aus Fig. 1, wobei jedoch in der Darstellung von Fig. 4 zumindest teilweise andere Komponenten der Vorrichtung 110 gezeigt sind. Hierbei entspricht die Darstellung in Fig. 4 der Darstellung aus Fig. 1 mit Ausnahme der Komponenten der Vorrichtung 110 sowie mit Ausnahme dessen, dass kein Fahrzeug dargestellt ist und nicht alle Daten und Signale explizit bezeichnet sind.

Die Vorrichtung 110 kann auch als eine erweiterte AIDE-ähnliche oder AIDEbasierte Architektur (AIDE = Adaptive Integrated Driver-vehicle InterfacE) aufweisen und bezeichnet werden. Die Erfassungseinrichtung 102 repräsentiert hierbei mehrere Sensoren, wobei die Nutzervorrichtung 106 mehrere Anwendungen repräsentiert, wobei die Interaktionsvorrichtung 120 eine Empfehlungsdienst-HMI (HMI = Human-Machine-Interface; Mensch-Maschine-Schnittstelle) repräsentiert.

Die Sensoren bzw. die Erfassungseinrichtung 102 ist signalübertragungsfähig mit einem sogenannten Knowledge Manager 441 bzw. einem Driver-Vehicle-Environment-Modul 441 bzw. DVE-Modul 441 oder Fahrer-Fahrzeug-Umfeld-Modul 441 verbunden.

Der Knowledge Manager 441 und die Anwendungen bzw. die Nutzervorrichtung 106 sind signalübertragungsfähig mit einem Interaktions- und Kommunikationsassistenten 442 (ICA = Interaction and Communication Assistant) und insbesondere mit einem Empfehlungsdienst-Modul 443 verbunden. Das Empfehlungsdienst-Modul 443 weist eine Nutzerbedürfnisidentifizierungseinrichtung 444 bzw. IUN-Einrichtung 444 (IUN = Identification of User Needs) und eine adaptive Interaktionssteuereinrichtung 445 bzw. adaptive IC-Einrichtung 445 (IC = Interaction Controller) auf.

Die Interaktionsvorrichtung 120 ist ausgebildet, um eine adaptive Benutzeroberfläche 420 (AUI = Adaptive User Interface) als grafische Benutzeroberfläche darzustellen.

Ferner ist der Interaktions- und Kommunikationsassistent 442 bzw. das Empfehlungsdienst-Modul 443 signalübertragungsfähig mit einem sogenannten Workload Manager 446 der Vorrichtung 110 verbunden. Dieser Workload Manager 446 wiederum ist signalübertragungsfähig mit einem sogenannten Resource Manager 447 verbunden. Das Empfehlungssignal 118 wird von dem Resource Manager 447 aus der Vorrichtung 110 zu der Interaktionsvorrichtung 120 ausgegeben.

Zur Architektur der Vorrichtung 110 ist zu bemerken, dass beispielsweise eine Herausforderung darin besteht, für den adaptiven Empfehlungsdienst 443 eine Architektur bereitzustellen, mit der viele oder alle Arten von Funktionen unterstützt werden können, insbesondere solche Funktionen, die während der Laufzeit installiert werden, beispielsweise durch Installieren von Apps direkt auf das Infotainmentsystem. Zusätzlich ist der adaptive Empfehlungsdienst 443 bzw. die Vorrichtung 110 auf aktuelle Forschungsthemen bezogen, wie beispielsweise Maschinenlernen zum Erlernen der Benutzerbedürfnisse, Situationsanalyse, innovative Interaktionskonzepte oder Benutzerinteraktionstechnologien. Deshalb sind Komponenten des adaptiven Empfehlungsdienstes 443 kontinuierlich weiterentwickelbar und austauschbar ausgelegt, um eine Integration jüngster Forschungsergebnisse zu ermöglichen, ohne das ganze System zu verändern. Dies ist durch Modularität und Erweiterbarkeit der Vorrichtung 110 erreichbar.

Im Projekt AIDE wurde eine HMI-Gesamtarchitektur für Fahrzeuge entworfen, um alle Displays im Fahrzeug zentral anzusteuern und abhängig von der Situation zu bestimmen, was angezeigt werden soll. Eine Architektur mit dem Driver-Vehicle-Environment-Modul 441 und dem Interaktions- und Kommunikationsassistenten 442 wurde entwickelt. Dabei analysiert das Driver-Vehicle-Environment-Modul 441 Sensorinformationen über Fahrer, Fahrzeug und Umfeld unter Verwendung unterschiedlicher Modelle und stellt die gewonnenen Erkenntnisse in Form von Daten anderen Anwendungen in dem Fahrzeug zur Verfügung. Der Interaktions- und Kommunikationsassistent 442 verwaltet und modifiziert die Interaktion mit dem Fahrer basierend auf den Erkenntnisdaten des Driver-Vehicle-Environment-Moduls 441. Die Vorrichtung 110 repräsentiert somit insbesondere eine Erweiterung der AIDE-Architektur um eine adaptive Unterstützung und mit Fokus auf die Erweiterbarkeit während der Laufzeit.

Als Basis für die Vorrichtung 110 kann eine AIDE-Architektur oder AIDE-ähnliche Architektur genutzt werden, wobei der adaptive Empfehlungsdienst 443 von bestehenden Ansätzen profitieren kann, wie beispielsweise einer zentralen Instanz für den Austausch von Wissen, einer Priorisierung von Nachrichten und einer zentralen Komponente, welche eine Interaktion mit dem Fahrer oder Nutzer steuert. Der adaptive Empfehlungsdienst 443 weist mit der IUN-Einrichtung 444 eine Komponente für die Identifikation der Benutzerbedürfnisse (IUN = identification od user needs) und mit der IC-Einrichtung 445 eine Komponente für die Steuerung der Interaktion mit dem Fahrer (IC = interaction controller) auf., wobei auch die adaptive Benutzeroberfläche 420 bzw. Benutzeroberflächenkomponente 420 (AUI) zum Anzeigen der Empfehlungen dazu gezählt werden kann. Die Komponenten sind in der übergeordneten Architektur der Vorrichtung 110 eingebettet oder ihr zugeordnet.

Der adaptive Empfehlungsdienst 443 ist ausgebildet, um den Fahrer bzw. Nutzer durch Übernehmen von Teilen von Routineaufgaben zu unterstützen. Daher ist der adaptive Empfehlungsdienst 443 bzw. die Vorrichtung 110 ausgebildet, um eine Verfügbarkeit von Funktionen und ein Routineverhalten des Nutzers in Abhängigkeit von der Situation zu erlernen. Der Verhaltensdatensatz kann vom Empfehlungsdienst 443 erfasst werden, um daraus Regeln in Gestalt des zumindest einen Regeldatensatzes für die Empfehlungen herzuleiten. Die Anwendungen 106 können ihre Funktionen auch registrieren und die Nutzung einer Funktion dem Empfehlungsdienst 443 berichten. Für jede berichtete Funktionsnutzung wird die aktuelle Situation aufgezeichnet, welche das DVE-Modul 441 bereitgestellt hat. Unter Verwendung dieser Information kann die IUN-Einrichtung 444 das Routinenutzungsverhalten analysieren und die Benutzerbedürfnisse des Fahrers in Abhängigkeit von der Situation erlernen. Die IUN-Einrichtung 444 ist für das Beantworten der Frage zuständig, was der Fahrer in der aktuellen Situation nutzen möchte. Diese Information wird an die IC-Einrichtung 445 weitergeleitet, welche die Frage beantwortet, wie eine Empfehlung dem Nutzer bereitgestellt werden sollte. Die IC-Einrichtung 445 kann eine Empfehlung in Gestalt des Empfehlungssignals 118 auf unterschiedlichen Adaptionsebenen bereitstellen, beispielsweise als ein Shortcut in einer Shortcutliste oder als eine Popup-Nachricht. Die IC-Einrichtung 445 ist ausgebildet, um zu priorisieren, welche Empfehlung angezeigt werden sollte und auf welche Weise. Die Empfehlungen werden von der IC-Einrichtung 445 an den Workload Manager 446 weitergeleitet, der ausgebildet ist, um ein Timing für das Ausgeben oder Darstellen der Empfehlung zu bestimmen. Die Arbeitsbelastung (Workload) des Fahrers wird in einer kritischen Situation somit nicht noch durch eine Empfehlung erhöht. Der Workload Manager 446 leitet das Empfehlungssignal 118 über den Resource Manager 447 zu einem geeigneten Zeitpunkt an die adaptive Benutzeroberfläche 420 weiter, wo sie auf einem Bildschirm der Interaktionsvorrichtung 120 angezeigt wird. Der Resource Manager 447 ist für die Verwaltung der Ausgaberessourcen in dem Fahrzeug zuständig und leitet die Empfehlung an die entsprechende, geeignete Anzeige weiter. Falls der Fahrer die Empfehlung annimmt, soll die vorkonfigurierte Funktion durch den Empfehlungsdienst 443 aufgerufen werden, indem eine Anforderung an die betreffende Anwendung 106 gesendet wird.

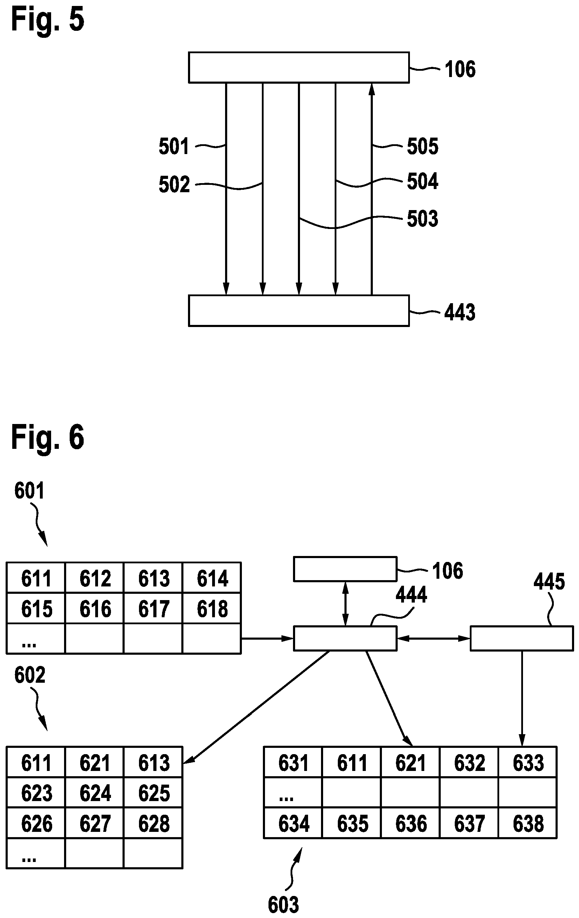

Fig. 5 zeigt eine schematische Darstellung eines Signalflusses zwischen zumindest einer Nutzervorrichtung 106 bzw. Anwendungen 106 und dem adaptiven Empfehlungsdienst 443 aus Fig. 4. Ein erstes Signal 501 von den Anwendungen 106 zu dem Empfehlungsdienst 443 repräsentiert eine Registrierung einer Funktion, z. B. subscribe (list(function, list(<param1>, ...))), wobei ein zweites Signal 502 von den Anwendungen 106 zu dem Empfehlungsdienst 443 eine Aktualisierung einer Funktion repräsentiert, z. B. update (list(function, list(<param1>, ...))), wobei ein drittes Signal 503 von den Anwendungen 106 zu dem Empfehlungsdienst 443 eine Streichung oder Auslistung einer Funktion repräsentiert, z. B. unsubscribe (list(function, list(<param1>, ...))), wobei ein viertes Signal 504 einen Bericht über eine Nutzung einer Funktion repräsentiert, z. B. report (function, list(param1, ...), time stamp), wobei ein fünftes Signal 505 von dem Empfehlungsdienst 443 zu den Anwendungen 106 eine Ausführung einer Funktion repräsentiert, z. B. execute (function, list(param1, ...)). Hierbei entsprechen das erste Signal 501, das zweite Signal 502, das dritte Signal 503 und/oder das vierte Signal 504 beispielsweise jeweils einem Nutzungssignal aus Fig. 1, wobei das fünfte Signal 505 beispielsweise dem Steuersignal aus Fig. 1 entspricht.

Fig. 6 zeigt eine schematische Darstellung von Komponenten des adaptiven Empfehlungsdienstes aus Fig. 4 bzw. Fig. 5 in Verbindung mit Anwendungen 106 und erlerntem Nutzerverhalten. Gezeigt sind hierbei von dem adaptiven Empfehlungsdienst in Fig. 6 die IUN-Einrichtung 444 und die IC-Einrichtung 445.

Ferner sind zur Veranschaulichung eine erste Tabelle 601 mit registrierten Funktionen, eine zweite Tabelle 602 mit Nutzungsverhalten und eine dritte Tabelle 603 mit Regeln und Empfehlungen gezeigt.

Die erste Tabelle 601 mit den registrierten Funktionen enthält in einer ersten Spalte eine Funktionsidentifikation bzw. Function ID 611, in einer zweiten Spalte einen Anwendungsnamen bzw. App Name 612, in einer dritten Spalte einen Funktionsnamen bzw. FcnName 613 und in einer vierten Spalte eine Parameterliste 614. In einer ersten Zeile mit Einträgen sind an einer Stelle 615 die Ziffer 1, an einer Stelle 616 der Begriff Navigation, an einer Stelle 617 der Befehl Navigiere zu und an einer Stelle 618 die Parameter <Startadresse>, <Zieladresse>eingetragen.

Die zweite Tabelle 602 mit dem Nutzungsverhalten enthält in einer ersten Spalte die Funktionsidentifikation bzw. Function ID 611, in einer zweiten Spalte Parameterwerte 621 und in einer dritten Spalte eine Situation (DVE) 622. In einer ersten Zeile mit Einträgen sind an einer Stelle 623 die Ziffer 1, an einer Stelle 624 beispielhaft die Parameterwerte <Maybachstr. 7, Leonberg> und an einer Stelle 625 beispielhaft die Situationsbeschreibung GPS: Home Time: 8:00 Day: Monday eingetragen. In einer zweiten Zeile mit Einträgen sind an einer Stelle 626 die Ziffer 1, an einer Stelle 627 beispielhaft die Parameterwerte <Maybachstr. 7, Leonberg> und an einer Stelle 628 beispielhaft die Situationsbeschreibung GPS: Home Time: 7:50 Day: Tuesday eingetragen.

Die dritte Tabelle 603 mit den Regeln und Empfehlungen enthält in einer ersten Spalte eine Identifikation bzw. ID 631, in einer zweiten Spalte die Funktionsidentifikation bzw. Function ID 611, in einer dritten Spalte die Parameterwerte 621, in einer vierten Spalte eine Situation 632 und in einer fünften Spalte einen Darstellungstyp 633. In einer Zeile mit Einträgen sind an einer Stelle 634 die Ziffer 5, an einer Stelle 635 die Ziffer 1, an einer Stelle 636 beispielhaft die Parameterwerte <Maybachstr. 7, Leonberg>, an einer Stelle 637 beispielhaft die Situationsbeschreibung GPS: Home Time: Morning Day: Weekday und an einer Stelle 638 beispielhaft der Darstellungstyp PopUp eingetragen.

Unter Bezugnahme insbesondere auf Fig. 5 und Fig. 6 sei angemerkt, dass zum Erlernen der Benutzerbedürfnisse des Fahrers der adaptive Empfehlungsdienst 443 ausgebildet ist, um zu erlernen, welche Funktionen verfügbar sind und welche der Fahrer verwendet. Auf solche Informationen hat der adaptive Empfehlungsdienst 443, der ein Teil eines Infotainmentsystems oder ein unabhängiges System sein kann, selbst dann Zugriff, wenn die Anwendungen 106 auf einem anderen System laufen, wie beispielsweise einem Smartphone, das in das Infotainmentsystem integriert ist. Der adaptive Empfehlungsdienst 443 ist ausgebildet, um solche Informationen direkt von den unterschiedlichen Anwendungen 106 zu beziehen. Der adaptive Empfehlungsdienst 443 ist ausgebildet, um dazu Schnittstellen bereitzustellen. Die Anwendungen 106 können ihre Funktionen und entsprechenden Parameter registrieren, die seitens des Empfehlungsdienstes 443 unterstützt werden sollen. Beispielsweise registriert (siehe auch 501) eine Anwendung "Navigation" (siehe 616) eine Funktion "Navigiere zu" (siehe 617) und den Parameter "Adresse" (siehe 618), der benötigt wird, um diese Funktion auszuführen. Zusätzlich können die Anwendungen 106 das Nutzungsverhalten einer Funktion an den Empfehlungsdienst 443 berichten, wie beispielsweise bei 504. Der Empfehlungsdienst 443 bildet eine solche berichtete Funktionsnutzung auf eine Situation ab. Der adaptive Empfehlungsdienst 443 verfügt dann über Daten, um ein Routinebenutzerverhalten bezogen auf eine Situation zu erlernen. Eine weitere Schnittstelle zum Aktualisieren der Funktion (siehe auch 502), beispielsweise Name oder Parameter, sowie eine zum Streichen oder Auslisten einer Funktion (siehe auch 503) werden bereitgestellt. Die Schnittstellen werden durch den adaptiven Empfehlungsdienst 443 bereitgestellt und durch die Anwendungen 106 genutzt. Aber es muss auch eine Schnittstelle durch die Anwendungen 106 bereitgestellt werden, um die vorkonfigurierten Funktionen aufzurufen bzw. auszuführen (siehe auch 505). Falls der Fahrer die Empfehlung annimmt, welche der Empfehlungsdienst 443 mit dem Empfehlungssignal bereitgestellt hat, soll die vorkonfigurierte Funktion ausgeführt werden. Daher sendet der Empfehlungsdienst 442 eine Anforderung in Gestalt des Steuersignals (siehe auch 505) direkt an die betreffende Anwendung 106.

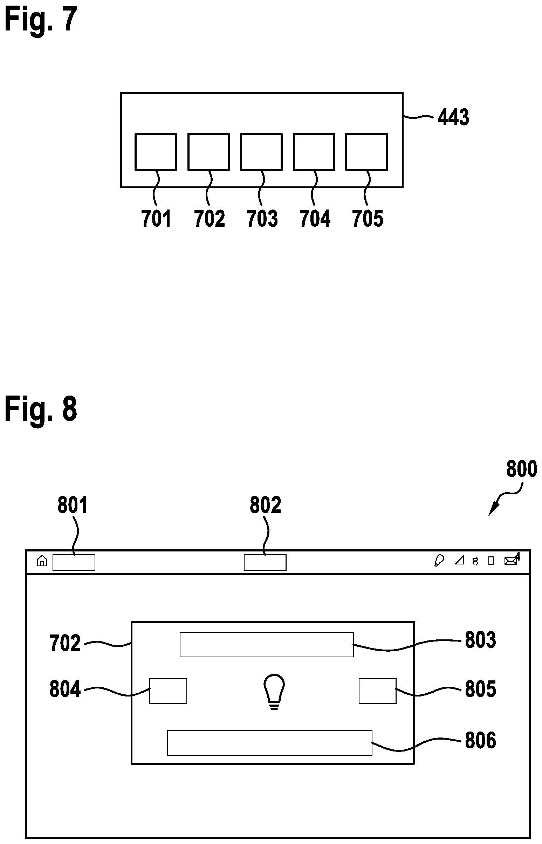

Fig. 7 zeigt eine schematische Darstellung des adaptiven Empfehlungsdienstes 443 aus Fig. 4, Fig. 5 bzw. Fig. 6. Hierbei sind Komponenten des adaptiven Empfehlungsdienstes 443 gezeigt, die eine Interaktion mit einem Nutzer und/oder eine Art der Darstellung von Empfehlungen mittels der zumindest einen Interaktionsvorrichtung betreffen. Eine erste Komponente 701 repräsentiert einen Einführungslehrgang bzw. ein Tutorium, wobei eine zweite Komponente 702 eine Benachrichtigung über neue Empfehlungen repräsentiert, wobei eine dritte Komponente 703 eine Darstellung der Empfehlungen repräsentiert, wobei eine vierte Komponente 704 ein Erläuterungsmenü repräsentiert, wobei eine fünfte Komponente 705 Einstellungen repräsentiert.

Anders ausgedrückt zeigt Fig. 7 mit den Komponenten 701, 702, 703, 704 und 705 des adaptiven Empfehlungsdienstes 443 somit Komponenten eines Interaktionskonzeptes, welches die Kommunikation mit dem Nutzer beschreibt, einschließlich einer Beschreibung dessen, wie Empfehlungen dem Nutzer präsentiert werden, Erläuterungen zum Verständnis, warum eine Empfehlung abgegeben wird, und der Möglichkeit zum Einstellen von Parametern. Die erste Komponente "Einführungslehrgang" 701 ist ausgebildet, um einem Nutzer bzw. Fahrer eine Funktionalität des adaptiven Empfehlungsdienstes 443 vor einer ersten Verwendung zu erläutern . Die zweite Komponente 702 ist die "Benachrichtigung über neue Empfehlungen", die ausgebildet ist, um den Nutzer über jüngst erlernte Empfehlungen zu informieren . Die dritte Komponente "Darstellung der Empfehlungen" 703 umfasst die unterschiedlichen Darstellungsformen für Empfehlungen. Die vierte Komponente "Erläuterungsmenü" 704 ist ausgebildet, um ein Verhalten des Empfehlungsdienstes 643 zu erläutern. Es wird erläutert, welche Empfehlungen abgegeben werden, in welcher Situation dies geschieht und welche Darstellungsformen existieren. Die fünfte Komponente "Einstellungen" 705 ist ausgebildet, um dem Nutzer die Möglichkeit zu geben, allgemeine Parameter des Empfehlungsdienstes 643 einzustellen. Dies kann in dem Erläuterungsmenü 704 für jede Empfehlung vorgenommen werden, aber unter Einstellungen 705 sind allgemeinere Einstellungen konfigurierbar.

Hinsichtlich des Einführungslehrgangs 701 ist anzumerken, dass der Nutzer somit als ersten Schritt eine Einführung anhand eines Lehrgangs bzw. Tutoriums erhält. Beispielsweise unter Verwendung eines kurzen Videos kann erläutert werden, wie der adaptive Empfehlungsdienst 443 funktioniert. Idealerweise wird dieses Video beispielsweise in dem Fahrzeug innerhalb eines natürlichen Verwendungskontextes gezeigt, aber es ist auch möglich, es auf einer mobilen Vorrichtung irgendwo anders zu betrachten. In diesem Tutorium 701 lernt der Nutzer, wie sich der adaptive Empfehlungsdienst 443 verhält. Dies kann durch Erhöhung der Transparenz das Gefühl eines Kontrollverlustes verringern. Diese erste Komponente 701 ist ein Umsetzungselement der Maßnahme "Systemhandlungen erläutern".

Hinsichtlich des Einstellungsmenüs 705 bzw. der Einstellungen 705 ist anzumerken, dass somit zusätzlich zu der Möglichkeit der Einstellung von Parametern jeder Empfehlung im Erläuterungsmenü 704, eine Konfiguration allgemeinerer Einstellungen durchgeführt werden kann, wie beispielsweise einer Vorgabeeinstellung einer Darstellungsebene von jüngst erlernten Empfehlungen. Solche Einstellungen können im Einstellungsmenü 705 geändert werden.

Fig. 8 zeigt eine Darstellung einer ersten Bildschirmanzeige 800 einer grafischen Benutzeroberfläche gemäß einem Ausführungsbeispiel. Bei der grafischen Benutzeroberfläche handelt es sich um die adaptive Benutzeroberfläche (AUI) aus Fig. 4 oder eine ähnliche Benutzeroberfläche. Die erste Bildschirmanzeige 800 weist an einer Stelle 801 einen Verweis auf einen Startbildschirm (Home) und an einer Stelle 802 eine Angabe von Datum und Uhrzeit auf, beispielsweise Mittwoch 25. Juni und 8:35 Uhr. Ferner weist die erste Bildschirmanzeige ein Fenster mit einer Umsetzung der zweiten Komponente "Benachrichtigung über neue Empfehlungen" 702 aus Fig. 7 auf. Die Benachrichtigung 702 weist an einer Stelle 803 eine Nutzeraufforderung, beispielsweise "Neue Empfehlungen zeigen?", an einer Stelle 804 ein Einstellelement "Ja", an einer Stelle 805 ein Einstellelement "Nein" und an einer Stelle 806 eine Einstellmöglichkeit, beispielsweise "Neue Empfehlungen immer zeigen"auf.

Hinsichtlich der zweiten Komponente 702, Benachrichtigung über neue Empfehlung, ist anzumerken, dass der adaptive Empfehlungsdienst ausgebildet ist, um die Gewohnheiten und das Nutzungsverhalten des Nutzers in Zuordnung zu einer Situation zu erlernen, während der Nutzer die Funktionen beispielsweise eines Infotainmentsystems nutzt. Die zweite Komponente 702 informiert den Benutzer über jüngst erlernte Empfehlungen. Die zweite Komponente 702 stellt beispielsweise auch ein wichtiges Element dahin gehend dar, das Gefühl eines Kontrollverlustes zu vermeiden und Transparenz zu erhöhen. Das sich ändernde Verhalten des adaptiven Empfehlungsdienstes wird dem Nutzer mitgeteilt und folglich steigt eine Verständlichkeit. Wenn eine neue Empfehlung erlernt wird, wird beispielsweise ein Symbol in der Statusleiste oben auf dem Bildschirm gezeigt. Der Nutzer weiß daher, dass sich ein Systemverhalten verändert hat und ihm zukünftig zusätzliche Empfehlungen angezeigt werden. Am Ende einer Fahrt fragt der Empfehlungsdienst beispielsweise den Nutzer, ob er die jüngst erlernten Empfehlungen sehen möchte. Dies ist auch manuell über das Erläuterungsmenü (siehe 704 in Fig. 7) möglich. Der Nutzer kann Parameter einer Empfehlung, wie beispielsweise den Darstellungstyp, verändern oder eine Empfehlung sogar löschen oder deaktivieren. Diese Benutzeroberflächenkomponente spricht auch die Maßnahme "Systemhandlungen erläutern" und die Maßnahme "Benutzereinstellung von Parametern ermöglichen" an.

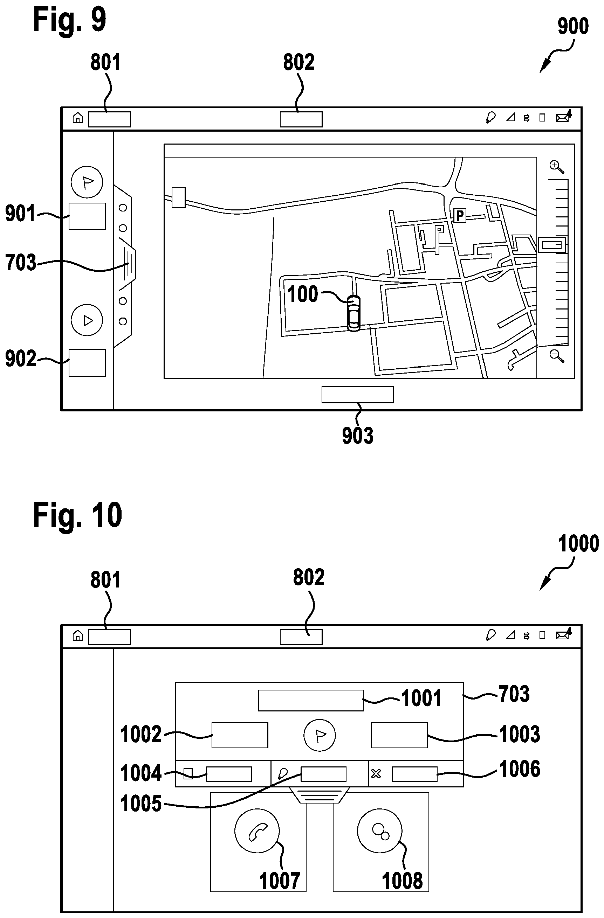

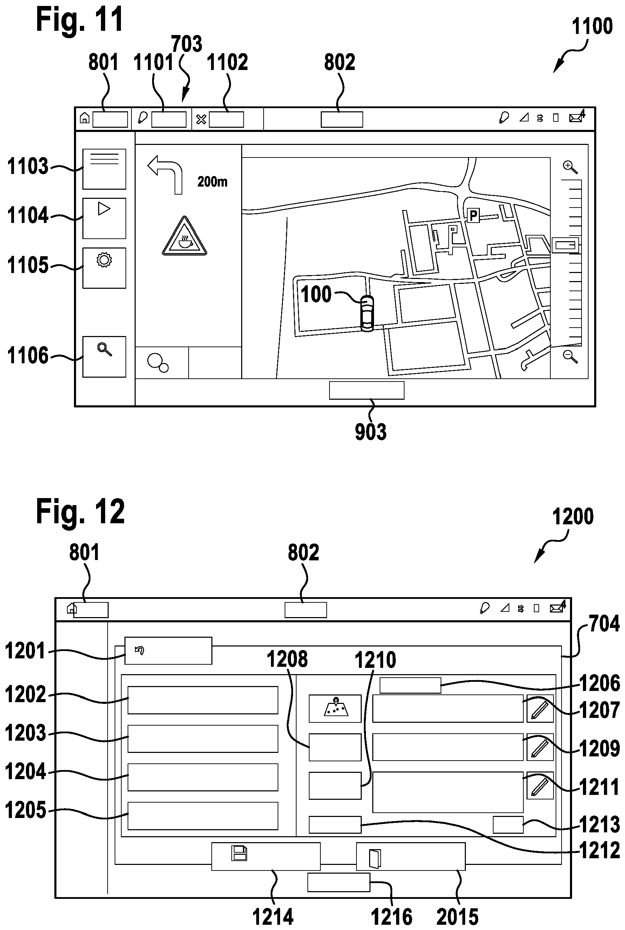

In den Figuren 9 bis 11 ist eine Darstellung von Empfehlungen gemäß der dritten Komponente "Darstellung der Empfehlungen" aus Fig. 7 veranschaulicht. Erlernte Empfehlungen können auf beispielsweise drei unterschiedliche Arten bzw. in einer von drei Ebenen dargestellt oder präsentiert werden: Nutzerauswahl (US - User Selection), siehe Fig. 9, Nutzerzustimmung (UA - User Approval), siehe Fig. 10, und vollständig adaptiv (FA - Fully Adaptive), siehe Fig. 11.

Fig. 9 zeigt eine Darstellung einer zweiten Bildschirmanzeige 900 einer grafischen Benutzeroberfläche gemäß einem Ausführungsbeispiel. Hierbei entspricht die zweite Bildschirmanzeige 900 der ersten Bildschirmanzeige aus Fig. 8 mit Ausnahme dessen, dass das Fenster mit der Benachrichtigung über neue Empfehlungen ausgeblendet ist und anstelle dessen andere Bildschirminhalte angezeigt sind. Somit weist die zweite Bildschirmanzeige 900 an der Stelle 801 den Verweis auf einen Startbildschirm (Home) und an der Stelle 802 die Angabe von Datum und Uhrzeit auf, beispielsweise Mittwoch 25. Juni und 8:35 Uhr. Ferner weist die zweite Bildschirmanzeige 900 eine beispielhafte Navigationskarte mit symbolischer Darstellung des Fahrzeugs 100, eine Randleiste mit einem beispielhaften Hinweis auf eine vorhandene Empfehlung an einer Stelle 901, beispielsweise "Navigiere zu: Büro", und einer beispielhaften Statusanzeige an einer Stelle 902, beispielsweise "Abspielen: SWR3", ein eingeklappt angezeigtes Fenster bzw. Shortcut-Menü mit der Darstellung 703 von Empfehlungen und an einer Stelle 903 eine Bezeichnung der ausgeführten Funktion, beispielsweise "Navigation", auf.

Fig. 10 zeigt eine Darstellung einer dritten Bildschirmanzeige 1000 einer grafischen Benutzeroberfläche gemäß einem Ausführungsbeispiel. Hierbei ist die dritte Bildschirmanzeige 1000 der ersten Bildschirmanzeige aus Fig. 8 und/oder der zweiten Bildschirmanzeige aus Fig. 9 ähnlich. Die dritte Bildschirmanzeige 1000 weist an der Stelle 801 den Verweis auf einen Startbildschirm (Home) und an der Stelle 802 die Angabe von Datum und Uhrzeit auf, beispielsweise Mittwoch 25. Juni und 8:35 Uhr. Ferner weist die dritte Bildschirmanzeige 1000 ein Fenster bzw. eine Popup-Nachricht mit der Darstellung 703 von Empfehlungen auf, wobei das Fenster beispielsweise an einer Stelle 1001 eine Bezeichnung der Empfehlung, beispielsweise "Navigiere zu: Büro", an einer Stelle 1002 ein Einstellelement "Ja", an einer Stelle 1003 ein Einstellelement "Nein", an einer Stelle 1004 ein Einstellelement "Löschen", an einer Stelle 1005 ein Einstellelement "Details", und an der Stelle 1006 ein Einstellelement "Deaktivieren" aufweist. Zudem weist die dritte Bildschirmanzeige 1000 beispielsweise an einer Stelle 1007 ein Einstellelement "Telefon" und an einer Stelle 1008 ein Einstellelement "Einstellungen" auf.

Fig. 11 zeigt eine Darstellung einer vierten Bildschirmanzeige 1100 einer grafischen Benutzeroberfläche gemäß einem Ausführungsbeispiel. Hierbei entspricht die vierte Bildschirmanzeige 1100 der zweiten Bildschirmanzeige aus Fig. 9 mit Ausnahme dessen, dass die Darstellung 703 von Empfehlungen auf andere Weise angezeigt ist und auch teils andere und weitere Bildschirminhalte angezeigt sind. Somit weist die vierte Bildschirmanzeige 1100 an der Stelle 801 den Verweis auf einen Startbildschirm (Home) und an der Stelle 802 die Angabe von Datum und Uhrzeit auf, beispielsweise Mittwoch 25. Juni und 8:35 Uhr. Ferner weist die vierte Bildschirmanzeige 1100 eine beispielhafte Navigationskarte mit symbolischer Darstellung des Fahrzeugs 100 und an der Stelle 903 die Bezeichnung der ausgeführten Funktion, beispielsweise "Navigation", auf. Auch weist die vierte Bildschirmanzeige 1100 eine Menüleiste mit einem Hinweis auf die Darstellung von Empfehlungen 703 in Gestalt eines Einstellelementes "Details" an einer Stelle 1101 und eines Einstellelementes "Beenden" an einer Stelle 1102 auf. Zudem weist die vierte Bildschirmanzeige 1100 beispielsweise eine Randleiste auf, die beispielsweise an einer Stelle 1103 ein Einstellelement "Menü", an einer Stelle 1104 ein Einstellelement "Start", an einer Stelle 1105 ein Einstellelement "Details" und an einer Stelle 1106 ein Einstellelement "Suche" enthält.

Unter Bezugnahme auf die Figuren 9 bis 11 werden nachfolgend die Arten der Darstellung 703 von Empfehlungen nochmals zusammenfassend und mit anderen Worten erläutert.

Wie bereits zuvor erwähnt, ist eine erste Möglichkeit zur Darstellung 703 einer Empfehlung ist der Typ US, wie es beispielsweise in Fig. 9 gezeigt ist. Dies bedeutet, dass der Nutzer eine Empfehlung aus einer Auswahl von Empfehlungen auswählen kann, die als ein Shortcut-Menü umgesetzt ist, in dem beispielsweise bis zu vier Empfehlungen gezeigt sind. Das Shortcut-Menü ist beispielsweise auf der linken Seite des Bildschirms in Fig. 9 neben der Randleiste gezeigt, wo der Fahrer ohne weiteres auf das Shortcut-Menü zugreifen kann. Eine Empfehlung besteht beispielsweise aus dem Bildsymbol bzw. Icon der betreffenden Anwendung, dem Namen der Funktion und einer Abkürzung für den Parameter. Beispielsweise ist die Empfehlung für die Navigation zum Büro durch das Bildsymbol der Navigationsanwendung, dem Funktionsnamen "Navigiere zu" und die Beschreibung "Büro" für den Parameter dargestellt. Die Reihenfolge der Empfehlungen in dem Shortcut-Menü hängt von ihrer Relevanz für die Situation ab. Die Empfehlung mit der größten Relevanz wird oben angezeigt. Falls der Nutzer auf einen Shortcut klickt, wird die zugeordnete, vorkonfigurierte Funktion ausgeführt. Das Shortcut-Menü kann minimiert werden, wie es in Fig. 9 gezeigt ist, und bei Bedarf wieder ausgeklappt. Somit wird nichts Wichtiges überlagert und das Infotainmentsystem kann wie gewohnt manuell benutzt werden. Auf dem Startbildschirm wird das Shortcut-Menü vorgabemäßig beispielsweise ausgeklappt angezeigt, um einen einfachen und schnellen Zugriff auf die Empfehlungen zu bieten. Bevor der Nutzer beginnt, eine Funktion manuell zu öffnen, kann er in dem Shortcut-Menü nachsehen, ob eine geeignete Empfehlung angezeigt wird, mit welcher das Ziel der Bedienung schneller zu erreichen ist. Falls sich für eine gegebene aktuelle Situation keine Empfehlung in dem Shortcut-Menü findet, wird es automatisch minimiert. Neue Empfehlungen werden beispielsweise in einer unterschiedlichen Farbe dargestellt, um dieselben einfacher erkennen zu können. Um mehr Informationen über eine Empfehlung zu erhalten, kann der Nutzer länger auf eine Empfehlung klicken, woraufhin sich ein zusätzliches Menü mit weiteren Optionen öffnet. Er hat dann die Wahl, zu dem Erläuterungsmenü zu gehen, um mehr Einzelheiten über die Empfehlung zu sehen, sie zu löschen oder zu deaktivieren. Der Nutzer kann daher das Verhalten des adaptiven Empfehlungsdienstes direkt für die gewählte Empfehlung beeinflussen und verstehen. Unter den drei Ebenen bzw. Darstellungsformen ist die Ebene US jene, welche die meiste Kontrolle bietet und am wenigsten auffällig ist, wobei der Grad an Unterstützung der niedrigste ist.

Die beispielsweise in Fig. 10 gezeigte, nächste Ebene der Darstellung, Nutzerzustimmung (UA), bietet mehr Unterstützung, da der Nutzer lediglich eine Empfehlung auf einmal erhält, die er annehmen oder ablehnen kann. Die Empfehlung wird in Form einer Popup-Nachricht angezeigt. Der Inhalt ist beispielsweise der gleiche wie dieser eines einzelnen Shortcuts in dem Shortcut-Menü der Ebene US (Anwendungsname, Funktionsnamen und Abkürzung für die Konfiguration). Die Auffälligkeit dieser Darstellungsform ist höher, da der Nutzer eine Entscheidung treffen muss, aber ist möglicherweise effizienter, da der Nutzer nicht alle gezeigten Empfehlungen zu erfassen braucht. Ähnlich der Ebene US, hat der Nutzer die Möglichkeit, sich eine detaillierte Beschreibung der Empfehlung anzeigen zu lassen, die Empfehlung zu löschen oder zu deaktivieren, indem er ein weiteres Menü über ein zusätzliches Steuerungselement (siehe 1005) öffnet.

Die beispielsweise in Fig. 11 veranschaulichte Ebene FA bietet unter den drei Ebenen bzw. Darstellungsformen am meisten Unterstützung durch Automatisierung. Es werden vorkonfigurierte Funktionen in der jeweiligen Situation autonom für den Nutzer ausgeführt. Die Darstellungsform ist unter den drei Darstellungsformen die auffälligste. Um für einen Nutzer ein Gefühl der Kontrolle zu verbessern, wird ein Einstellelement (siehe 1102), mit dem die autonome Ausführung beendet werden kann, und eine Möglichkeit (siehe 1101) zur Anzeige von Einzelheiten der Empfehlung in dem Erläuterungsmenü angeboten, wo die Empfehlung auch deaktiviert oder gelöscht werden kann. Eine Beendigung kann auch als ein Äquivalent zu einer Ablehnung betrachtet werden.

Welche Darstellungsebene für welche Empfehlung die geeignetste ist, hängt von vielen Faktoren ab, beispielsweise individuellen Präferenzen des Nutzers oder der Art der Funktion. Ein Wechsel zwischen den Ebenen, was ermöglicht, die Kontrolle graduell an das System zu verlagern, kann ebenfalls adaptiv erfolgen. Diese Entscheidung kann dem Nutzer überlassen werden, was über das Erläuterungsmenü gehandhabt werden kann. Vorgabemäßig kann eine jüngst erlernte Empfehlung beispielsweise als ein Shortcut wiedergegeben werden. Diese Vorgabekonfiguration kann im Einstellungsmenü geändert werden. Die Komponente "Darstellung von Empfehlungen" 703 spricht die Maßnahme "Handlungen dem Benutzer zur Zustimmung vorlegen" an, wobei es insbesondere in jeder Darstellungsebene erforderlich ist, die Empfehlung zu anzunehmen. Auf der Ebene FA ist keine direkte Bestätigung erforderlich, aber der Nutzer entscheidet im Erläuterungsmenü, ob eine Empfehlung in dieser Form angezeigt werden sollte oder nicht. Die Darstellungsebene spricht auch die Maßnahme "Kontrolle graduell an System verlagern" an, da die Vorgabeeinstellung für jede Empfehlung das Shortcut-Menü ist, welches die meiste Kontrolle ermöglicht, und der Nutzer kann wählen, ob er dem System mehr Kontrolle übergeben möchte, indem er eine höhere Automatisierungsebene bzw. eine andere Darstellungsebene wählt.

Fig. 12 zeigt eine Darstellung einer fünften Bildschirmanzeige 1200 einer grafischen Benutzeroberfläche gemäß einem Ausführungsbeispiel. Hierbei ist die fünfte Bildschirmanzeige 1200 der Bildschirmanzeige aus einer der Figuren 8 bis 11 ähnlich. Die fünfte Bildschirmanzeige 1200 weist an der Stelle 801 den Verweis auf einen Startbildschirm (Home) und an der Stelle 802 die Angabe von Datum und Uhrzeit auf, beispielsweise Mittwoch 25. Juni und 8:35 Uhr. Ferner weist die fünfte Bildschirmanzeige 1200 ein Fenster mit einer Umsetzung der vierten Komponente "Erläuterungsmenü" 704 aus Fig. 7 auf. Das Fenster mit dem Erläuterungsmenü 704 weist beispielhaft an einer Stelle 1201 ein Einstellelement "Zurück", an einer Stelle 1202 ein Einstellelement "Allgemein", an einer Stelle 1203 ein Einstellelement "Adaptionsebene", an einer Stelle 1204 ein Einstellelement "Parameter", an einer Stelle 1205 ein Einstellelement "Zustand", an einer Stelle 1206 die Bezeichnung "Funktion:", an einer Stelle 1207 den Funktionsnamen "Navigation", an einer Stelle 1208 die Bezeichnung "Name:", an einer Stelle 1209 den Begriff "Büro", an einer Stelle 1210 die Bezeichnung "Details:", an einer Stelle 1211 den Inhalt "Maybachstraße 7 71229 Leonberg", an einer Stelle 1212 die Bezeichnung "Zuverlässigkeit:", an einer Stelle 1213 die Angabe "90 %", an einer Stelle 1214 ein Einstellelement "Speichern" oder einer Stelle 1215 ein Einstellelement "Löschen" auf. Ferner weist die fünfte Bildschirmanzeige 1200 an einer Stelle 1216 die Bezeichnung "Empfehlungen"auf.

Das Erläuterungsmenü 704 ermöglicht es dem Nutzer, das Verhalten des adaptiven Empfehlungsdienstes zu verstehen. eine Transparenz des Systemverhaltens kann erhöht werden, was zu gesteigertem Vertrauen und gesteigerter Akzeptanz bezüglich des Systems führen kann. Alle erlernten Empfehlungen können in dem Erläuterungsmenü 704 dem Nutzer präsentiert werden. Die Herausforderung für das Erläuterungsmenü 104 besteht darin, alle notwendigen Informationen anzuzeigen, wobei ein Nutzer das Systemverhalten verstehen und eine geeignete Darstellungsform finden können soll. Das Erläuterungsmenü 704 weist beispielsweise eine hierarchische Darstellungsform auf, um die Erläuterungen und Informationen zu präsentieren, die für ein Verständnis des Systemverhaltens hilfreich sind.

Für jede Empfehlung wird im Erläuterungsmenü 704 beispielsweise eine Zusammenfassung angezeigt. Um mehr Einzelheiten zu erhalten und Parameter der Empfehlungen zu verändern, kann eine Empfehlung ausgewählt werden und kann ein gesonderter Bildschirm bzw. ein Fenster angezeigt werden, wie es beispielsweise in Fig. 12 dargestellt ist. In dieser Ansicht ist es möglich, Informationen zu prüfen, die bei Abgabe einer Empfehlung angezeigt werden (Anwendungsname, Funktionsname, Abkürzung/Name der Konfiguration). Es ist auch möglich, die aktuelle Darstellungsform zu sehen (siehe 1203) und nötigenfalls zu ändern. Die Parameter (siehe 1204) und Werte, welche die betreffende Situation definieren, sind ebenso verfügbar wie der Status oder Zustand (siehe 1205) der Empfehlung, der aktiv oder inaktiv sein kann. Der Zustand (siehe 1205) wird beispielsweise mit einem grünen Haken für aktiv und einem roten "X" für inaktiv dargestellt. Darüber hinaus ist es möglich, eine Empfehlung zu löschen (siehe 1215) und die Änderungen zu speichern (siehe 1214). Der Unterschied zwischen Löschen und Deaktivieren besteht darin, dass eine gelöschte Empfehlung nicht mehr in der Liste von Empfehlungen aufgeführt wird, während eine inaktive Empfehlung immer noch im Erläuterungsmenü 704 aufgelistet wird und wieder aktiviert werden kann. Dies ist beispielsweise nötig, wenn der Fahrer eine Empfehlung für eine gewisse Zeitdauer deaktivieren möchte. Die Maßnahmen, welche durch diese Komponente Erläuterungsmenü 704 angesprochen werden, sind "Inspektion des Benutzermodells ermöglichen", "Systemhandlungen erläutern", "Benutzereinstellung von Parametern ermöglichen" und "Kontrolle graduell an System verlagern". Die ersten zwei Maßnahmen werden durch Anzeigen aller Details angesprochen, die der Empfehlungsdienst erlernt hat. Dies erläutert zugleich das Verhalten des Empfehlungsdienstes. Dem Nutzer ist es möglich, die Parameter (siehe 1204) der Empfehlungen zu verändern, einschließlich der Auswahl der Darstellungsform (siehe 1203). Daher ist es möglich, die Kontrolle graduell an das System abzugeben.

Unter Bezugnahme auf die Figuren 1 bis 12 werden nachfolgend in partieller Wiederholung zumindest ein Ausführungsbeispiel sowie Hintergründe von Ausführungsbeispielen zusammenfassend sowie mit anderen Worten erläutert.

Die Bereitstellungsvorrichtung 110, das Verfahren 200 bzw. der adaptive Empfehlungsdienst 443 sind ausgebildet, um Unterstützung beim Zugriff auf Funktionen zu bieten. Hierbei kann beispielsweise eine adaptive bzw. kontextsensitive Unterstützung für eine Vielzahl von Anwendungen 106 geboten werden, um einen schnelleren Zugriff auf Funktionen zu ermöglichen. Auch kann ein funktionsübergreifender Ansatz für ein Infotainmentsystem geschaffen werden, der um beliebige Funktionen erweiterbar ist, da Schnittstellen bereitgestellt werden können. Zudem kann ein funktionsübergreifendes Interaktionskonzept mit Fokus nicht nur auf der Interaktion mit dem Nutzer, sondern auch auf der Architektur und Funktionalität bereitgestellt werden.

Eine potenzielle Ablenkung des Fahrers von einer Fahraufgabe kann durch die steigende Anzahl an Funktionen im Fahrzeug 100 und dem Wunsch des Fahrers diese auch während der Fahrt zu bedienen zunehmen. Durch die Bereitstellungsvorrichtung 110, das Verfahren 200 bzw. den adaptiven Empfehlungsdienst 443 ist es möglich, den Fahrer bzw. Nutzer beim Funktionszugriff zu unterstützen und diesen so wenig ablenkend wie möglich zu gestalten. Durch eine personalisierte situationsadaptive Unterstützung mit der Bereitstellungsvorrichtung 110, dem Verfahren 200 bzw. den adaptiven Empfehlungsdienst 443, wobei dem Fahrer Funktionen auf verschiedene Art und Weise angeboten werden können, lassen sich die Anzahl der Bedienschritte verringern und die Ablenkung reduzieren.

Es kann durch die Bereitstellungsvorrichtung 110, das Verfahren 200 bzw. den adaptiven Empfehlungsdienst 443 auch eine Vielfalt der Applikationen im Fahrzeug 100 berücksichtigt werden. Diese Vielfalt entsteht dadurch, dass der Fahrer beispielsweise seine eigenen Applikationen auf seinem Smartphone mit ins Fahrzeug 100 bringt oder Apps direkt auf einem Infotainmentsystem installiert werden.

Zudem kann durch die Bereitstellungsvorrichtung 110, das Verfahren 200 bzw. den adaptiven Empfehlungsdienst 443 eine Koordination von Anzeigen im Fahrzeug 100 für die Darstellung von Empfehlungen erreicht werden. Fahrerassistenzsysteme und Informationssysteme zeigen ansonsten beispielsweise unabhängig voneinander auf verschiedenen Anzeigevorrichtungen Warnmeldungen und Informationen an. Die adaptive Unterstützung, die dem Fahrer durch die Bereitstellungsvorrichtung 110, das Verfahren 200 bzw. den adaptiven Empfehlungsdienst 443 auf verschiedenen Wegen Vorschläge unterbreitet, ist in eine Architektur integriert, die einen zentralen Kanal zum Fahrer bereitstellt und bestimmt, was wann wo angezeigt wird.

Der adaptive Empfehlungsdienst 443 bzw. die Bereitstellungsvorrichtung 110 ist ausgebildet, um Vorschläge zu verschiedenen Funktionen, beispielsweise Funktionen des Infotainmentsystems, zu unterbreiten. Dabei werden entsprechende Schnittstellen 115 zum Informationsaustausch zwischen Applikationen 106 und Empfehlungsdienst 443 bzw. der Bereitstellungsvorrichtung 110 bereitgestellt.

Die Architektur des Empfehlungsdienstes 443 bietet Schnittstellen zu den Applikationen 106, aber auch die Interaktionssteuerung 445 ist erweiterbar gestaltet, insbesondere während der Laufzeit erweiterbar, wobei z. B. Shortcuts zu beliebigen Funktionen angezeigt werden können, solange ein Icon der Applikation 106, Name der Funktion und Beschreibung des Parameters zur Verfügung stehen.

Mit dem Resource Manager 447 kann eine Komponente bereitgestellt werden, die ausgebildet ist, um die Interaktionsressourcen, z. B. Displays, des Fahrzeugs 100 zu verwalten. Diese Komponente Resource Manager 447 nimmt somit eine wichtige Rolle im Zusammenspiel mit dem adaptiven Empfehlungsdienst 443 ein.

Gleiches gilt für die Komponente Workload Manager 446, die ausgebildet ist, um Empfehlungen dem Anwender zu einem geeigneten Zeitpunkt präsentieren, um nicht in einer kritischen Situation noch zusätzlich für Ablenkung zu sorgen. Auch die Komponente Workload Manager 446 ist im Zusammenhang mit dem Empfehlungsdienst 443 bedeutsam.

Insbesondere die Interaktionssteuerung 445 ist dahin gehend erweitert, dass sie ein Erläuterungsmenü 704 bzw. Erklärungsmenü 704, ein Tutorial 701, Mitteilungen 702, wenn sich das Verhalten ändert, und ein Menü 705 für Einstellungen aufweist. Der adaptive Empfehlungsdienst 443 kann einem Nutzer erhöhte Kontrolle und Transparenz Umgang mit dem adaptiven Empfehlungsdienst 443 ermöglichen.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (200) zum Bereitstellen eines Empfehlungssignals (118) zum Steuern zumindest einer Funktion in einem Fahrzeug (100), wobei die zumindest eine Funktion auf mindestens einer Nutzervorrichtung (106) ausführbar ist, die zumindest temporär in dem Fahrzeug (100) angeordnet oder anordenbar ist, wobei das Verfahren (200) folgende Schritte aufweist:
Einrichten (230) zumindest einer Schnittstelle (115) zu der mindestens einen Nutzervorrichtung (106) spätestens während einer Laufzeit des Verfahrens (200);
Registrieren (240) der zumindest einen Funktion spätestens während der Laufzeit des Verfahrens (200) über die zumindest eine eingerichtete Schnittstelle (115), wobei erst im Schritt (240) des Registrierens Kenntnis über die zumindest eine Funktion erlangt wird;
Verknüpfen (250) mindestens eines von der zumindest einen Schnittstelle (115) zu mindestens einer Nutzervorrichtung (106) eingelesenen Nutzungssignals (108 ; 501, 502 , 503 , 504), das Nutzungsdaten über eine Nutzung der zumindest einen Funktion, die spätestens während der Laufzeit des Verfahrens (200) registriert wird, durch einen Nutzer repräsentiert, mit Situationsdaten (104), die eine durch zumindest eine dem Fahrzeug (100) zugeordnete Erfassungseinrichtung (102) erfasste, kontextuale Situation während der Nutzung repräsentieren, um einen Verhaltensdatensatz zu erzeugen;
Durchführen (210) eines Vergleichs der aktuellen Situationsdaten (104), welche die durch die zumindest eine dem Fahrzeug (100) zugeordnete Erfassungseinrichtung (102) erfasste, aktuelle, kontextuale Situation repräsentieren, mit zumindest einem von dem zumindest einen Verhaltensdatensatz hergeleiteten Regeldatensatz (114), wobei der Verhaltensdatensatz erlernte Daten über eine situationsbezogene, routinemäßige Nutzung der zumindest einen Funktion durch einen Nutzer repräsentiert, wobei der Verhaltensdatensatz durch Verknüpfen des mindestens einen von der zumindest einen Schnittstelle (115) zu mindestens einer Nutzervorrichtung (106) eingelesenen Nutzungssignals (108 ; 501, 502 , 503 , 504), das Nutzungsdaten über eine Nutzung der zumindest einen Funktion, die spätestens während der Laufzeit des Verfahrens (200) registriert wird, durch einen Nutzer repräsentiert, mit Situationsdaten (104), die eine durch die zumindest eine dem Fahrzeug (100) zugeordnete Erfassungseinrichtung (102) erfasste, kontextuale Situation während der Nutzung repräsentieren, erzeugt ist; und
Erzeugen (220) des Empfehlungssignals (118) in Abhängigkeit von einem Ergebnis des im Schritt (210) des Durchführens durchgeführten Vergleichs, wobei das Empfehlungssignal (118) eine Empfehlung zum Steuern der zumindest einen Funktion in dem Fahrzeug (100) repräsentiert.

2. Verfahren (200) gemäß Anspruch 1, mit einem Schritt des Herleitens des zumindest einen Regeldatensatzes (114) von dem zumindest einen Verhaltensdatensatz unter Verwendung eines maschinellen Lernverfahrens.

3. Verfahren (200) gemäß einem der vorangegangenen Ansprüche, bei dem im Schritt (210) des Durchführens des Vergleichs die aktuellen Situationsdaten (104) und/oder im Schritt (250) des Verknüpfens die Situationsdaten (104) von einer Schnittstelle zu dem Fahrzeug (100), von einer Schnittstelle zu mindestens einer Nutzerfassungseinrichtung zum Erfassen eines Verhaltens des Nutzers und/oder von einer Schnittstelle zu mindestens einer Umfelderfassungseinrichtung zum Erfassen eines Umfeldes des Fahrzeugs (100) und/oder des Nutzers eingelesen werden.

4. Verfahren (200) gemäß einem der vorangegangenen Ansprüche, mit einem Schritt (290) des Ausgebens des erzeugten Empfehlungssignals (118) an eine Schnittstelle zu mindestens einer Interaktionsvorrichtung (120) zur Interaktion mit dem Nutzer in dem Fahrzeug (100), wobei das Empfehlungssignal (118) ausgebildet ist, um bei Verwendung durch eine Interaktionsvorrichtung (120) eine Darstellung der Empfehlung zum Steuern der zumindest einen Funktion in dem Fahrzeug (100) mittels einer grafischen Benutzeroberfläche (420) zu bewirken.

5. Verfahren (200) gemäß Anspruch 4, mit einem Schritt (270) des Bestimmens mindestens einer Interaktionsvorrichtung (120) aus einer Mehrzahl von Interaktionsvorrichtungen (120) für den Schritt des Ausgebens (290) unter Verwendung von aktuellen Situationsdaten (104).

6. Verfahren (200) gemäß einem der Ansprüche 4 bis 5, mit einem Schritt (280) des Ermittelns eines Zeitpunktes zum Ausgeben des erzeugten Empfehlungssignals (118) unter Verwendung von aktuellen Situationsdaten (104).

7. Verfahren (200) gemäß einem der vorangegangenen Ansprüche, mit einem Schritt (260) des Generierens einer grafischen Benutzeroberfläche (420) zum Darstellen der durch das Empfehlungssignal (118) repräsentierten Empfehlung zum Steuern der zumindest einen Funktion in dem Fahrzeug (100), wobei im Schritt (260) des Generierens eine grafische Benutzeroberfläche (420) generiert wird, mittels derer zumindest ein Einstellelement zum Einstellen einer Darstellungsweise der durch das Empfehlungssignal (118) repräsentierten Empfehlung unter Verwendung mindestens einer Interaktionsvorrichtung (120) in dem Fahrzeug (100) darstellbar ist.

8. Verfahren (200) gemäß Anspruch 7, bei dem im Schritt (260) des Generierens eine grafische Benutzeroberfläche (420) generiert wird, mittels derer zumindest eine Benachrichtigung (702) über einen neu hergeleiteten Regeldatensatz (114) und/oder ein neu bereitgestelltes Empfehlungssignal (118) unter Verwendung mindestens einer Interaktionsvorrichtung (120) in dem Fahrzeug (100) darstellbar ist.

9. Vorrichtung (110; 441, 442, 443 , 444 , 445, 446, 447), die eingerichtet ist, das Verfahren (200) gemäß einem der vorangegangenen Ansprüche auszuführen.

10. Computerprogramm, das dazu eingerichtet ist, das Verfahren (200) gemäß einem der vorangegangenen Ansprüche auszuführen.

11. Maschinenlesbares Speichermedium, auf dem das Computerprogramm nach Anspruch 10 gespeichert ist.

## Claims

1. Method (200) for providing a recommendation signal (118) for controlling at least one function in a vehicle (100), wherein the at least one function can be executed on at least one user device (106) which is or can be arranged at least temporarily in the vehicle (100), wherein the method (200) has the following steps:
setting up (230) at least one interface (115) to the at least one user device (106) at the latest during a running time of the method (200);
recording (240) the at least one function at the latest during the running time of the method (200) via the at least one set-up interface (115), wherein knowledge about the at least one function is not acquired until in the recording step (240);
linking (250) at least one useful signal (108; 501, 502, 503, 504) which is read in by the at least one interface (115) to at least one user device (106) and represents useful data about a use, by a user, of the at least one function which is recorded at the latest during the running time of the method (200), with situation data (104) which represent a contextual situation detected by at least one detection device (102) assigned to the vehicle (100), during the use in order to generate a behaviour data set;
carrying out (210) a comparison of the current situation data (104), which represent the current contextual situation detected by the at least one detection device (102) assigned to the vehicle (100), with at least one control data set (114) which is derived from the at least one behaviour data set, wherein the behaviour data set represents learned data about a situation-related, routine use of the at least one function by a user, wherein the behaviour data set is generated by linking the at least one useful signal (108; 501, 502, 503, 504) which is read in by the at least one interface (115) to at least one user device (106) and which represents useful data about a use, by a user, of the at least one function which is recorded at the latest during the running time of the method (200), with situation data (104) which represent a contextual situation during the use, detected by the at least one detection device (102) which is assigned to the vehicle (100); and
generating (220) the recommendation signal (118) in accordance with a result of the comparison which is carried out in the carrying out step (210), wherein the recommendation signal (118) represents a recommendation to control the at least one function in the vehicle (100) .

2. Method (200) according to Claim 1, having a step of deriving the at least one control data set (114) from the at least one behaviour data set using a machine learning method.

3. Method (200) according to one of the preceding claims, in which in the step (210) of carrying out the comparison the current situation data (104) are read in, and/or in the linking step (250) the situation data (104) are read in, from an interface to the vehicle (100), from an interface to at least one use-detection device for detecting a behaviour of the user and/or from an interface to at least one surroundings-detection device for detecting surroundings of the vehicle (100) and/or of the user.

4. Method (200) according to one of the preceding claims, having a step (290) of outputting the generated recommendation signal (118) to an interface to at least one interaction device (120) for interacting with the user in the vehicle (100), wherein the recommendation signal (118) is designed to bring about, in the case of use by an interaction device (120), a display of the recommendation to control the at least one function in the vehicle (100) by means of a graphic user interface (420).

5. Method (200) according to Claim 4, having a step (270) of determining at least one interaction device (120) from a multiplicity of interaction devices (120) for the outputting step (290) using current situation data (104).

6. Method (200) according to one of Claims 4 to 5, having a step (280) of determining a time for outputting the generated recommendation signal (118) using current situation data (104).

7. Method (200) according to one of the preceding claims, having a step (260) of generating a graphic user interface (420) in order to display the recommendation, represented by the recommendation signal (118), to control the at least one function in the vehicle (100), wherein in the generating step (260) a graphic user interface (420) is generated by means of which at least one setting element, for setting the way in which the recommendation represented by the recommendation signal (118) is displayed, can be formed using at least one interaction device (120) in the vehicle (100).

8. Method (200) according to Claim 7, in which in the generating step (260) a graphic user interface (420) is generated by means of which at least one notification (702) about a newly derived control data set (114) and/or a newly provided recommendation signal (118) can be formed using at least one interaction device (120) in the vehicle (100).

9. Device (110; 441, 442, 443, 444, 445, 446, 447) which is configured to execute the method (200) according to one of the preceding claims.

10. Computer program which is configured to execute the method (200) according to one of the preceding claims.

11. Machine-readable storage medium on which the computer program according to Claim 10 is stored.

## Revendications

1. Procédé (200) de fourniture d'un signal de recommandation (118) pour la commande d'au moins une fonction dans un véhicule (100), dans lequel ladite au moins une fonction peut être exécutée sur au moins un dispositif utilisateur (106) qui est disposé ou peut être disposé au moins temporairement dans le véhicule (100), le procédé (200) comprenant les étapes suivantes :
l'établissement (230) d'au moins une interface (115) avec ledit au moins un dispositif utilisateur (106) au plus tard pendant un temps d'exécution du procédé (200) ;
l'enregistrement (240) de ladite au moins une fonction au plus tard pendant le temps d'exécution du procédé (200) par l'intermédiaire de ladite au moins une interface (115) établie, dans lequel les connaissances concernant ladite au moins une fonction ne sont acquises que lors de l'étape (240) d'enregistrement ;
la combinaison (250) d'au moins un signal d'utilisation (108 ; 501, 502, 503, 504) lu par ladite au moins une interface (115) avec au moins un dispositif utilisateur (106) et représentant des données d'utilisation concernant une utilisation, par un utilisateur, de ladite au moins une fonction, qui est enregistrée au plus tard pendant le temps d'exécution du procédé (200), avec des données de situation (104) qui représentent, pendant l'utilisation, une situation contextuelle détectée par au moins un dispositif de détection (102) associé au véhicule (100), afin de générer un ensemble de données de comportement ;
l'exécution (210) d'une comparaison des données de situation actuelles (104) représentant la situation contextuelle actuelle détectée par ledit au moins un dispositif de détection (102) associé au véhicule (100) avec au moins un ensemble de données de règles (114) dérivé dudit au moins un ensemble de données de comportement, dans lequel l'ensemble de données de comportement représente des données apprises concernant une utilisation routinière, liée à une situation, de ladite au moins une fonction par un utilisateur, dans lequel l'ensemble de données de comportement est généré en combinant ledit au moins un signal d'utilisation (108 ; 501, 502, 503, 504) lu par ladite au moins une interface (115) avec au moins un dispositif utilisateur (106) et représentant des données d'utilisation concernant une utilisation, par un utilisateur, de ladite au moins une fonction, qui est enregistrée au plus tard pendant le temps d'exécution du procédé (200), avec des données de situation (104) qui représentent, pendant l'utilisation, une situation contextuelle détectée par ledit au moins un dispositif de détection (102) associé au véhicule (100) ; et
la génération (220) du signal de recommandation (118) en fonction d'un résultat de la comparaison effectuée lors de l'étape (210) d'exécution, dans lequel le signal de recommandation (118) représente une recommandation de commande de ladite au moins une fonction dans le véhicule (100) .

2. Procédé (200) selon la revendication 1, comprenant une étape consistant à dériver ledit au moins un ensemble de données de règles (114) dudit au moins un ensemble de données de comportement par utilisation d'un procédé d'apprentissage automatique.

3. Procédé (200) selon l'une des revendications précédentes, dans lequel, lors de l'étape (210) d'exécution de la comparaison, les données de situation actuelles (104) et/ou, lors de l'étape (250) de combinaison, les données de situation (104) sont lues par une interface avec le véhicule (100), par une interface avec au moins un dispositif de détection d'utilisateur destiné à détecter un comportement de l'utilisateur et/ou par une interface avec au moins un dispositif de détection d'environnement destiné à détecter un environnement du véhicule (100) et/ou de l'utilisateur.

4. Procédé (200) selon l'une des revendications précédentes, comprenant une étape (290) de fourniture en sortie du signal de recommandation (118) généré à une interface avec au moins un dispositif d'interaction (120) destiné à l'interaction avec l'utilisateur dans le véhicule (100), dans lequel le signal de recommandation (118) est conçu pour provoquer, lors de l'utilisation par un dispositif d'interaction (120), une visualisation de la recommandation de commande de ladite au moins une fonction dans le véhicule (100) au moyen d'une interface utilisateur graphique (420).

5. Procédé (200) selon la revendication 4, comprenant une étape (270) de détermination d'au moins un dispositif d'interaction (120) à partir d'une pluralité de dispositifs d'interaction (120) pour l'étape de fourniture en sortie (290) en utilisant de données de situation actuelles (104).

6. Procédé (200) selon l'une des revendications 4 et 5, comprenant une étape (280) de détermination d'un instant de fourniture en sortie du signal de recommandation (118) généré en utilisant des données de situation actuelles (104).

7. Procédé (200) selon l'une des revendications précédentes, comprenant une étape (260) de génération d'une interface utilisateur graphique (420) pour visualiser la recommandation représentée par le signal de recommandation (118) afin de commander ladite au moins une fonction dans le véhicule (100), dans lequel, lors de l'étape (260) de génération, une interface utilisateur graphique (420) est générée, au moyen de laquelle au moins un élément de réglage permettant de régler un mode de visualisation de la recommandation représentée par le signal de recommandation (118) peut être visualisé par utilisation d'au moins un dispositif d'interaction (120) dans le véhicule (100).

8. Procédé (200) selon la revendication 7, dans lequel, lors de l'étape (260) de génération, une interface utilisateur graphique (420) est générée, au moyen de laquelle au moins une notification (702) concernant un ensemble de données de règles (114) nouvellement dérivé et/ou un signal de recommandation (118) nouvellement fourni peut être visualisée dans le véhicule (100) par utilisation d'au moins un dispositif d'interaction (120).

9. Dispositif (110 ; 441, 442, 443, 444, 445, 446, 447) conçu pour mettre en œuvre le procédé (200) selon l'une des revendications précédentes.

10. Programme informatique conçu pour mettre en œuvre le procédé (200) selon l'une des revendications précédentes.

11. Support de stockage lisible par machine sur lequel est stocké le programme informatique selon la revendication 10.
